# EUROPEAN PATENT SPECIFICATION

(11) **EP 2 652 005 B1**
(45) Date of publication and mention of the grant of the patent: **28.03.2018**
(21) Application number: 12708208.9
(22) Date of filing: 22.02.2012
(51) Int. Cl.: C08G 63/00, C08G 63/78, C08J 11/04

(54) **POLY(BUTYLENE TEREPHTHALATE) ESTER COMPOSITIONS, METHODS OF MANUFACTURE, AND ARTICLES THEREOF**
POLY(BUTYLENTEREPHTHALAT) ESTER ZUSAMMENSETZUNG, HERSTELLUNGSVERFAHREN UND DARAUS HERGESTELLTE FORMTEILE
COMPOSITION D'UN ESTER DE POLY(BUTYLENETEREPHTHALATE), PROCEDE DE PREPARATION ET PRODUITS

(30) Priority: 22.02.2011 US 201113032051
(43) Date of publication of application: 23.10.2013
(73) Proprietor: SABIC Global Technologies B.V., 4612 PX Bergen op Zoom (NL)
(72) Inventor: BELL, Philip, Wesley, Mount Vernon, IN 47620 (US); SHAH, Dhaval, Evansville, IN 47712 (US)
(74) Representative: Stiebe, Lars Magnus
(86) International application number: PCT/US2012/026051
(87) International publication number: WO 2012/116028

(56) References cited:
- EP-A1- 1 344 765
- EP-A1- 1 437 377
- WO-A1-2007/089600
- US-A- 5 266 601
- US-A- 5 952 520
- UKIELSKI R ET AL: "EFFECT OF CHEMICAL MODIFICATION OF POLY(BUTYLENE TEREPHTHALATE) ON ELASTIC PROPERTIES", INTERNATIONAL POLYMER SCIENCE AND TECHNOLOGY, RAPRA TECHNOLOGY, SHREWABURY, GB, vol. 31, no. 3, 1 January 2004 (2004-01-01), pages T/70-T/75, XP001192932, ISSN: 0307-174X
- DATABASE WPI Week 200003 Thomson Scientific, London, GB; AN 2000-033619 XP002680772, & JP 11 302443 A (KK IS) 2 November 1999 (1999-11-02)

## Description

### BACKGROUND

This disclosure relates to poly(butylene terephthalate) compositions, methods of manufacture, and articles thereof, wherein the poly(butylene terephthalate) is manufactured in part from recycled or scrap polyesters.

Thermoplastic polyesters such as poly(butylene terephthalate) (PBT) are readily molded into useful articles, and articles comprising PBT have valuable characteristics including strength, toughness, high gloss, and solvent resistance. PBT therefore has utility in a wide range of applications, including automotive parts, electric appliances, and electronic devices.

Many manufacturers and consumers prefer to use more ecologically acceptable PBT. One method of making PBT more ecologically acceptable is to use recycled or scrap material in its manufacture. A particular challenge, however, in using recycle or scrap material is attaining properties comparable to the PBT derived from virgin material. There accordingly remains a need in the art for PBT derived at least in part from recycle or scrap material wherein the critical properties of the PBT are comparable to PBT derived from virgin material.

Ulrieski et al. "Effect of chemical modification of poly(butylene terephthalate) on elastic properties" (International Polymer Science and Technology, Rapra Technology, Shrewabury, GB, vol. 31, no. 3) aims to modify poly(butylene terephthalate) in order to obtain a polymer with good elastic properties and impact strength for use in the manufacture of domestic equipment housings. The PBT disclosed in this document comprises 3 or more wt% of isophthalic acid based units.

Patent WO2007089600A1 discloses a process for making modified poly(butylene terephthalate) random copolymers from a polyethylene terephthalate component. In that invention, PBT comprises more than 1.5% of impurities.

Patent US5266601A discloses a process for poly(butylene terephthalate) with less than 1.0 wt % units derived from ethylene glycol from poly(butylene terephthalate) scrap by diolysis and ester exchange with 1,4-butanediol and subsequent polycondensation. In that invention, PBT comprises 2.2 or more wt% isophthalic acid and diethylene glycol based units.

### BRIEF SUMMARY OF THE INVENTION

The present document discloses a dimethyl terephthalate residual composition that comprises: a. dimethyl terephthalate derived from a terephthalic-containing polyester homopolymer, terephthalic-containing polyester copolymer, or a combination thereof; and b. from more than 0 to less than 0.8 wt.% of a residual component selected from dimethyl isophthalate, cyclohexane dimethanol, diethylene glycol, triethylene glycol, or a combination thereof.

Thus a first aspect of the present invention is a poly(butylene terephthalate) composition that comprises a poly(butylene terephthalate) copolymer reaction product of a dimethyl terephthalate derived from a terephthalic-containing polyester homopolymer, terephthalic-containing-polyester copolymer, or a combination thereof; and from more than 0 to less than 0.8 wt.% of a residual component selected from dimethyl isophthalate, cyclohexane dimethanol, diethylene glycol, triethylene glycol, or a combination thereof; with 1,4-butanediol.

A method for the manufacture of the poly(butylene terephthalate) composition comprises polymerizing the dimethyl terephthalate residual composition and 1,4-butanediol.

Further disclosed are articles comprising the poly(butylene terephthalate) composition. Methods of manufacturing an article comprise shaping by extrusion, calendaring, molding, or injection molding the poly(butylene terephthalate) composition.

The above described and other features are exemplified by the following detailed description.

### BRIEF DESCRIPTION OF THE DRAWINGS

Figure 1 shows melting point as a function of the percentage of total impurities in the PBT made in Examples 1-10.
Figure 2 shows crystallization temperature as a function of the percentage of total impurities in the PBT made in Examples 1-10.
Figure 3 shows heat deflection temperature with a loading stress of 0.455 MPa as a function of the percentage of total impurities present in the dimethyl terephthalate used to make the PBT used in the stabilized PBT made in Examples 11-20.
Figure 4 shows heat deflection temperature with a loading stress of 1.82 MPa as a function of the percentage of total impurities present in the dimethyl terephthalate used to make the PBT used in the stabilized PBT made in Examples 11-20.
Figure 5 shows mold shrinkage measured in the parallel direction as a function of the percentage of total impurities present in the dimethyl terephthalate used to make the PBT used in the stabilized PBT made in Examples 11-20.
Figure 6 shows mold shrinkage measured in the perpendicular direction as a function of the percentage of total impurities present in the dimethyl terephthalate used to make the PBT used in the stabilized PBT made in Examples 11-20.
Figure 7 shows tensile elongation at break as a function of the percentage of total impurities present in the dimethyl terephthalate used to make the PBT used in the stabilized PBT made in Examples 11-20.
Figure 8 shows heat deflection temperature with a loading stress of 0.455 MPa as a function of the percentage of total impurities present in the dimethyl terephthalate used to make the PBT used in the flame retardant composition with a very high PBT content made in Examples 21-30.
Figure 9 shows heat deflection temperature with a loading stress of 1.82 MPa as a function of the percentage of total impurities present in the dimethyl terephthalate used to make the PBT composition used in the flame retardant composition with a very high PBT content made in Examples 21-30.
Figure 10 shows total energy measured by the biaxial impact test as a function of the percentage of total impurities present in the dimethyl terephthalate used to make the PBT used in the flame retardant composition with a very high PBT content made in Examples 21-30.
Figure 11 shows heat deflection temperature with a loading stress of 0.455 MPa as a function of the percentage of total impurities present in the dimethyl terephthalate used to make the PBT used in the impact modified composition with a polycarbonate / PBT blend using a high PBT content made in Examples 31-40.
Figure 12 shows heat deflection temperature with a loading stress of 1.82 MPa as a function of the percentage of total impurities present in the dimethyl terephthalate used to make the PBT used in the impact modified composition with a polycarbonate / PBT blend using a high PBT content made in Examples 31-40.
Figure 13 shows modulus of elasticity as a function of the percentage of total impurities present in the dimethyl terephthalate used to make the PBT used in the impact modified composition with a polycarbonate / PBT blend using a high PBT content made in Examples 31-40.

### DETAILED DESCRIPTION OF THE INVENTION

Our invention is based on the discovery that it is now possible to make a poly(butylene terephthalate) (PBT) composition derived at least in part from recycle or scrap polyesters and having a combination of desirable properties, including melting point, crystallization temperature, heat deflection temperature, and tensile elongation. In particular, the PBT is manufactured using a dialkyl terephthalate residual composition that is derived from a terephthalic acid-based polyester. It has been discovered that careful selection and regulation of certain amounts and/or types of impurities in the residual composition allows the manufacture of PBT from scrap or recycle polyesters that has properties comparable to those of PBT derived from virgin monomers.

As used herein, the terms "recycle" or "scrap" are not intended to limit the source of the terephthalic acid-based polyester, as any terephthalic acid-based polyester can be used regardless of its source.

As used herein the singular forms "a," "an," and "the" include plural referents. The term "combination" is inclusive of blends, mixtures, alloys, reaction products, and the like. Unless defined otherwise, technical and scientific terms used herein have the same meaning as is commonly understood by one of skill. Compounds are described using standard nomenclature. The term "and a combination thereof" is inclusive of the named component and/or other components not specifically named that have essentially the same function.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount that is greater than 0, and up to and including the higher named amount.

The PBT composition comprises a PBT that has been manufactured using a terephthalic acid diester monomer derived from a terephthalic acid-containing homopolymer, a terephthalic-containing copolymer, or a combination thereof. For example, the PBT can be using a terephthalic acid diester monomer derived from a terephthalic acid-containing polyester, wherein the polyester can be a homopolymer, a copolymer, or a combination thereof. For convenience such polyester homopolymers, copolymers, and combination can be collectively referred to herein as a poly(hydrocarbylene terephthalate)). Poly(hydrocarbylene terephthalate)s may contain units derived from dicarboxylic acids in addition to the terephthalic acid, for example isophthalic acid, adipic acid, glutaric acid, azelaic acid, sebacic acid, fumaric acid, and the various isomers of cyclohexane dicarboxylic acid. The poly(hydrocarbylene terephthalate)s can be a poly(alkylene terephthalate), wherein the alkylene group comprises 2 to 18 carbon atoms. Examples of alkylene groups include ethylene, 1,2-butylene, 1,3-butylene, 1,4-butylene, trimethylene, pentylene, hexylene, cyclohexylene, 1,4-cyclohexylene, and 1,4-cyclohexanedimethylene. A combination comprising at least one of the foregoing alkylene groups can be present. Poly(arylene terephthalate)s can also be used, for example poly(naphthalene terephthalate)s based on naphthalene dicarboxylic acids, including the 2,6-, 1,4-, 1,5-, or 2,7-isomers but the 1,2-, 1,3-, 1,6-, 1,7-, 1,8-, 2,3-, 2,4-, 2,5-, and/or 2,8-isomers. The poly(hydrocarbylene terephthalate)s can also have a combination of alkylene and arylene groups. In a specific embodiment, the poly(hydrocarbylene terephthalate) is poly(ethylene terephthalate). As described above, other alkylene or arylene groups can be present, in addition to residues derived from other dicarboxylic acids.

The residual composition comprising the diester monomer derived from the poly(hydrocarbylene terephthalate) can comprise a (C₁₋₃)alkyl ester of terephthalic acid, and in particular a dimethyl terephthalate (DMT). The dimethyl terephthalate residual composition can be made by any suitable process, provided that the resulting dimethyl terephthalate residual composition includes more than 0 to less than 0.8 wt.% of a residual component selected from dimethyl isophthalate, cyclohexane dimethanol, diethylene glycol, triethylene glycol, or a combinations thereof. In an embodiment, our compositions can be made by a process that involves depolymerization of a polyester by, for example, treatment of bulk poly(ethylene terephthalate) with super-heated methanol vapor in the presence of a suitable transesterification catalyst at atmospheric pressure, provided that the resulting dimethyl terephthalate residual composition includes more than 0 to less than 0.8 wt.% of a residual component selected from dimethyl isophthalate, cyclohexane dimethanol, diethylene glycol, triethylene glycol, or a combinations thereof. In another embodiment, poly(alkylene terephthalate, particularly poly(ethylene terephthalate), can alternatively be treated with steam at a temperature from about 200°C to about 450°C, where the steam-treated poly(ethylene terephthalate) is then reduced from a brittle solid product to a powder having a mean particles size of from about 0.0005 to 0.002 millimeters, after which the fine powder is atomized with a gaseous substance including inert gas and methanol vapor to form an aerosol. The aerosol is conducted through a reaction zone at a temperature of 250°C to 300°C in the presence of excess methanol vapors to produce DMT, provided that the resulting dimethyl terephthalate residual composition includes more than 0 to less than 0.8 wt.% of a residual component selected from dimethyl isophthalate, cyclohexane dimethanol, diethylene glycol, triethylene glycol, or a combinations thereof. Alternatively, poly(ethylene terephthalate) waste can be subdivided into dimensions between 4 and 35 mesh and treated at a temperature of 100°C to 300°C in the presence of methanol and acid catalysts to produce DMT, provided that the resulting dimethyl terephthalate residual composition includes more than 0 to less than 0.8 wt.% of a residual component selected from dimethyl isophthalate, cyclohexane dimethanol, diethylene glycol, triethylene glycol, or a combinations thereof . Scrap polyester can be dissolved in oligomers of ethylene glycol and terephthalate acid or dimethyl terephthalate, followed by passing super-heated methanol through the solution, where the ethylene glycol and dimethyl terephthalate are subsequently recovered overhead. In still another embodiment, our composition can be made by processes that use methanol vapor under pressurized conditions, provided that the resulting dimethyl terephthalate residual composition includes more than 0 to less than 0.8 wt.% of a residual component selected from dimethyl isophthalate, cyclohexane dimethanol, diethylene glycol, triethylene glycol, or a combinations thereof . The temperature at which the process to make the residual composition is practiced can vary. In an embodiment, when a process that uses methanol under pressure is used in conjunction with a transesterification catalyst., the process is practiced at a temperature ranging from 120-200 °C, or higher than 200 °C.

The monomers produced from these processes can be purified, for example by techniques such as distillation, crystallization, and filtration. However, the cost of the purification steps can render the recovered monomers more expensive than virgin raw materials. Surprisingly, it has been found by the inventors hereof that only very specific levels of impurities can be present in the (C₁₋₃)alkyl terephthalic esters, in particular DMT, used to produce PBT, yielding PBT that has properties comparable to PBT produced from virgin monomers. Without being bound by theory, it is believed that at least a portion of the impurities are incorporated into the PBT backbone, resulting in a copolymer with altered properties.

Thus, a di(C₁₋₃)alkyl terephthalic ester residual composition, and a DMT residual composition in particular derived from a terephthalic-containing polyester homopolymer, terephthalic-containing copolymer, or a combination thereof and containing from more than 0 to less than 0.8 wt.% of a residual component selected from dimethyl isophthalate, cyclohexane dimethanol, diethylene glycol, triethylene glycol, and combinations thereof can be successfully used in the manufacture of PBT having commercially valuable properties.

In another embodiment, a di(C₁₋₃)alkyl terephthalic ester residual composition, and a DMT residual composition in particular derived from a terephthalic-containing polyester homopolymer, terephthalic-containing copolymer, or a combination thereof and containing from more than 0 to less than 0.8 wt.% of a residual component selected from dimethyl isophthalate, cyclohexane dimethanol, diethylene glycol, triethylene glycol, and combinations thereof can be successfully used in the manufacture of PBT having commercially valuable properties.

Methods for the manufacture of PBT from a di(C₁₋₃)alkyl terephthalic esters are known, and can be used to manufacture PBT from a di(C₁₋₃)alkyl terephthalic ester residual compositions, and in particular the DMT residual compositions, and 1,4-butanediol. For example, polyesters can be obtained by interfacial polymerization, melt-process condensation, or solution phase condensation in the presence of an acid catalyst. The catalyst facilitates the transesterification reaction, and can be selected from antimony compounds, tin compounds, titanium compounds, combinations thereof as well as many other metal catalysts and combinations of metal catalysts that have been disclosed in the literature. The amount of catalyst required to obtain an acceptable polymerization rate at the desired polymerization temperature will vary, and can be determined by experimentation. The catalyst amount can be 1 to 5000 ppm, or more. It is possible to prepare a branched polyester in which a branching agent, for example, a glycol having three or more hydroxyl groups or a trifunctional or multifunctional carboxylic acid has been incorporated. Furthermore, it is sometimes desirable to have various concentrations of acid and hydroxyl end groups on the polyester, depending on the ultimate end use of the composition.

In general, the PBT manufactured from 1,4-butanediol and the DMT residue from more than 0 to less than 0.8 wt.% of a residual component selected from dimethyl isophthalate, cyclohexane dimethanol, diethylene glycol, triethylene glycol, and combinations thereof can have an intrinsic viscosity of 0.4 to 2.0 deciliters per gram (dL/g), specifically 0.5 to 1.5 dL/g, more specifically 0.6 to 1.2 dL/g, as measured in a 60:40 by weight phenol/1,1,2,2-tetrachloroethane mixture at 23°C. The PBT can have a weight average molecular weight of 10,000 to 200,000 Daltons, specifically 50,000 to 150,000 Daltons as measured by gel permeation chromatography (GPC). The polyester component can also comprise a mixture of different batches of PBT prepared under different process conditions in order to achieve different intrinsic viscosities and/or weight average molecular weights.

In a specific embodiment, the PBT reaction product of 1,4-butanediol and the DMT residue having from more than 0 to less than 0.8 wt.% of a residual component selected from dimethyl isophthalate, cyclohexane dimethanol, diethylene glycol, triethylene glycol, and combinations thereof can have a melting temperature that is within 1.5°C of the melting temperature of the same PBT that is the reaction product of virgin dimethyl terephthalate and 1,4-butanediol.

The PBT reaction product of 1,4-butanediol and the DMT residue having from more than 0 to less than 0.8 wt.% of a residual component selected from dimethyl isophthalate, cyclohexane dimethanol, diethylene glycol, triethylene glycol, and combinations thereof butanediol can have a crystallization temperature that is within 7.4°C of the crystallization temperature of the same PBT that is the reaction product of virgin dimethyl terephthalate and.

In another specific embodiment, the PBT reaction product manufactured from the di(C₁₋₃)alkyl terephthalic ester residue, specifically the DMT residue having from more than 0 to less 0.8 wt.% of the residual component can have a crystallization temperature ranging from 173 °C to 188 °C.

The PBT reaction product of the DMT residue and 1,4-butanediol can be used as a component in thermoplastic compositions for a variety of purposes. The PBT can be present in the thermoplastic composition in an amount from or from 20 to 99.99 wt.%, or from 20 to 95 wt.%, based on the total weight of the composition. Within this range, at least 50 wt.%, specifically at least 70 wt.%, of the PBT is present. In one embodiment, the polyester is present in an amount from 50 to 99 wt.% , based on the total weight of the thermoplastic composition, specifically from 60 to 98 wt.%, more specifically from 70 to 95 wt.%, each amount based on the total weight of the thermoplastic composition.

Such thermoplastic composition can optionally comprise other polyesters and/or other polymers, in an amount of from more than 0 to 30 weight percent (wt.%), based on the total weight of the PBT reaction product and other polymers in the thermoplastic polyester composition. For example, a thermoplastic polyester composition comprising PBT manufactured from the di(C₁₋₃)alkyl terephthalic ester residue, specifically the DMT residue, can comprise from 1 to 30 wt.% percent, based on the total weight of the polyesters and other polymers in the thermoplastic polyester composition, of a second polyester, for example poly(ethylene terephthalate), poly(ethylene naphthalate), poly(1,4-butylene naphthalate), poly(trimethylene terephthalate), poly(1,4-cyclohexanedimethylene 1,4-cyclohexanedicarboxylate), poly(1,4-cyclohexanedimethylene terephthalate), poly(1,4-butylene-co-1,4-but-2-ene diol terephthalate), poly(1,4-cyclohexanedimethylene-co-ethylene terephthalate), or a combination comprising at least one of the foregoing polyesters. Alternatively, the thermoplastic polyester composition can comprise 1 to 10 wt.%, based on the total weight of the polyester and other polymers in the composition, of a polycarbonate and/or an aromatic copolyester carbonate. In a specific embodiment, the polymer component of the thermoplastic composition consists only of the PBT. In another embodiment, the polymer component comprises at least 70 wt.% of the PBT.

With the proviso that desired properties, such as mold shrinkage, tensile elongation, heat deflection temperature, and the like are not adversely affected, the thermoplastic compositions comprising PBT manufactured from the di(C₁₋₃)alkyl terephthalic ester residue, specifically the DMT residue, can optionally further comprise other known additives used in thermoplastic polyester compositions such as non-reinforcing fillers, stabilizers such as antioxidants, thermal stabilizers, radiation stabilizers, and ultraviolet light absorbing additives, as well as mold release agents, plasticizers, quenchers, lubricants, antistatic agents, dyes, pigments, laser marking additives, and processing aids. A combination comprising one or more of the foregoing or other additives can be used. A specific example of an additive combination is a hindered phenol stabilizer and a waxy mold release agent such as pentaerythritol tetrastearate. When used, the additives are generally present in an amount of 0.01 to 5 wt.%, specifically 0.05 to 2 wt.%.

The thermoplastic PBT composition can optionally comprise a reinforcing fiber. Any rigid reinforcing fiber can be used, for example, a glass fiber, a carbon fiber, a metal fiber, a ceramic fiber or whisker, and the like. The fibers can be chopped or continuous.

In some applications, it can be desirable to treat the surface of the fiber with a chemical coupling agent to improve adhesion to the polyester in the thermoplastic polyester composition. Examples of useful coupling agents are alkoxy silanes and alkoxy zirconates. Amino, epoxy, amide, or thio functional alkoxy silanes are especially useful. Fiber coatings with high thermal stability are preferred to prevent decomposition of the coating, which could result in foaming or gas generation during processing at the high melt temperatures required to form the compositions into articles.

The fibers can have diameters of 6 to 30 micrometers. The reinforcing fibers can be provided in the form of monofilaments or multifilaments and can be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Reinforcing fibers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

In one embodiment, the reinforcing fiber is a glass fiber. An exemplary glass fiber is one that is relatively soda free, specifically fibrous glass filaments comprising lime-alumino-borosilicate glass, which is also known as "E" glass. In a specific embodiment the glass fiber has a diameter of 10 to 13 micrometers. The glass fibers can be flat. Exemplary flat glass fibers have a modulus of greater than or equal to 6,800 megaPascals (MPa), and can be chopped or continuous. The flat glass fiber can have various cross-sections, for example, trapezoidal, rectangular, or square. In preparing the molding compositions it is convenient to use a glass fiber in the form of chopped strands having an average length of from 0.1 mm to 10 mm, and having an average aspect ratio of 2 to 5. In articles molded from the compositions on the other hand shorter lengths will typically be encountered because during compounding considerable fragmentation can occur. When used, the glass fiber is present in an amount of 0.1 to 4.5 wt.%, more specifically 0.5 to 4 wt.%, and still more specifically 1 to 2.5 wt.%, based on the weight of the thermoplastic PBT composition. When amounts less than 0.1 wt.% are used, there is no improvement in flexural modulus or tensile strength (tensile stress at yield). When amounts greater than or equal to 5 wt.% are used, the thermoplastic polyester composition will not meet the UL94 V0 performance standard at a thickness of 0.8 mm and will not be sufficiently ductile.

The thermoplastic PBT compositions can optionally comprise a non-fibrous inorganic filler, which can impart additional beneficial properties to the compositions such as thermal stability, increased density, stiffness, and/or texture. Non-fibrous inorganic fillers include, but are not limited to, alumina, amorphous silica, alumino silicates, mica, clay, talc, glass flake, glass microspheres, metal oxides such as titanium dioxide, zinc sulfide, ground quartz, and the like. The amount of non-fibrous filler can be in a range of between 0 wt.% and 50 wt.% based on the weight of the total composition.

The thermoplastic PBT compositions can optionally comprise both a reinforcing fiber and a platy filler. Combinations of glass fibers, carbon fibers or ceramic fibers with a platy filler, for example mica or flaked glass, can give enhanced properties. In general, the flat, plate-like filler has a length and width at least ten times greater than its thickness, where the thickness is from 1 to 1000 microns. Combinations of rigid fibrous fillers with flat, plate-like fillers can reduce warp of the molded article.

The thermoplastic compositions comprising PBT manufactured from the di(C₁₋₃)alkyl terephthalic ester residue, specifically the DMT residue, can be prepared by blending the components of the composition so that they are homogeneously dispersed in a continuous matrix of the polyester. A number of blending processes can be used. In an exemplary process, the PBT, other optional polymers, and/or other additives are mixed in an extrusion compounder and extruded to produce molding pellets. In another process, the components, including any reinforcing fibers and/or other additives, are mixed with the PBT by dry blending, fluxed on a mill and either comminuted or extruded and chopped. The components can also be mixed and directly molded, e.g. by injection or transfer molding. All of the components are dried as much as possible prior to blending. In addition, compounding is carried out with as short a residence time in the machine as possible and at the lowest possible temperature to minimize loss of components by decomposition or volatilization. The temperature is carefully controlled, and friction heat is utilized.

In one embodiment, the components are pre-compounded, pelletized, and then molded. Pre-compounding can be carried out in known equipment. For example, after pre-drying the polyester composition (e.g., for four hours at 120°C), a single screw extruder can be fed with a dry blend of the ingredients, the screw employed having a long transition section to ensure proper melting. Alternatively, a twin-screw extruder with intermeshing co-rotating screws can be fed with polyester and other components at the feed port and reinforcing fibers (and other additives) can optionally be fed downstream. In either case, a generally suitable melt temperature will be 230°C to 300°C. The pre-compounded components can be extruded and cut up into molding compounds such as granules, pellets, and the like by standard techniques. The granules or pellets can then be molded in any known equipment used for molding thermoplastic compositions, such as a Newbury or van Dorn type injection-molding machine with cylinder temperatures at 230°C to 280°C, and mold temperatures at 55°C to 95°C. The granules and pellets can also be extruded into films or sheets. The articles formed by molding or extrusion of the thermoplastic polyester compositions possess an excellent balance of properties.

An article molded from the thermoplastic compositions comprising PBT manufactured from the di(C₁₋₃)alkyl terephthalic ester residue, specifically the DMT residue, can have a melt volume ratio (MVR) of 10 to 70 cm³/ 10 minute, more specifically 15 to 50 cm³/ 10 minute, measured in accordance with ISO11443 at 250°C and 2.16 kg.

An article molded from the thermoplastic compositions comprising PBT manufactured from the di(C₁₋₃)alkyl terephthalic ester residue, specifically the DMT residue having from more than 0 to less than 0.8 wt.% of a residual component selected from dimethyl isophthalate, cyclohexane dimethanol, diethylene glycol, triethylene glycol, and combinations thereof, can have a tensile stress at break of at least 15 MPa, specifically at least 30 MPa, and more specifically at least 35 MPa, as measured in accordance with ASTM D 638 on molded samples having a thickness of 3.2 mm.

An article molded from the thermoplastic compositions comprising PBT manufactured from the di(C₁₋₃)alkyl terephthalic ester residue, specifically the DMT residue having from more than 0 to less than 0.8 wt.% of a residual component selected from dimethyl isophthalate, cyclohexane dimethanol, diethylene glycol, triethylene glycol, and combinations thereof, can have a flexural modulus of from 1,700 to 4,500 MPa, more specifically 2,000 to 4,000 MPa, measured in accordance with ASTM 790.

In a specific embodiment, an article molded from the thermoplastic compositions comprising PBT manufactured from the di(C₁₋₃)alkyl terephthalic ester residue, specifically the DMT residue having from more than 0 to less than 0.8 wt.% of a residual component selected from dimethyl isophthalate, cyclohexane dimethanol, diethylene glycol, triethylene glycol, and combinations thereof, can have a tensile elongation at break of 0 to 169%, specifically at least 1% to 169%, at least 4% to 169%, or at least 10% to 169%, as measured in accordance with ASTM D638 on molded samples having a thickness of 3.2 mm.

An article molded from the thermoplastic compositions comprising PBT manufactured from the di(C₁₋₃)alkyl terephthalic ester residue, specifically the DMT residue having from more than 0 to less than 0.8 wt.% of a residual component selected from dimethyl isophthalate, cyclohexane dimethanol, diethylene glycol, triethylene glycol, and combinations thereof, can have a mold shrinkage in the perpendicular direction ranging from 1.6% to 2.5%.

In another specific embodiment, an article molded from the thermoplastic compositions comprising PBT manufactured from the di(C₁₋₃)alkyl terephthalic ester residue, specifically the DMT residue having from more than 0 to less than 0.8 wt.% of a residual component selected from dimethyl isophthalate, cyclohexane dimethanol, diethylene glycol, triethylene glycol, and combinations thereof, has at least one of (a) a mold shrinkage in the parallel direction that is at least 98% of the mold shrinkage in the parallel direction of the same article comprising a PBT composition wherein the PBT is the reaction product of virgin dimethyl terephthalate and 1,4-butanediol; (b) a mold shrinkage in the perpendicular direction that is at least 98% of the mold shrinkage in the parallel direction of the same article comprising the same PBT composition wherein the PBT is the reaction product of virgin dimethyl terephthalate and 1,4-butanediol; or (c) a first heat deflection temperature that is within 9.3°C of the heat deflection temperature measured at 0.455 MPa of the same article comprising a PBT composition wherein the PBT is the reaction product of virgin dimethyl terephthalate and 1,4-butanediol and a second heat deflection temperature that is within 2.3°C of the heat deflection temperature measured at 1.82 MPa of the same article comprising a PBT composition wherein the PBT is the reaction product of virgin dimethyl terephthalate and 1,4-butanediol.

Still further in an embodiment, an article molded from the thermoplastic compositions comprising PBT manufactured from the di(C1-3)alkyl terephthalic ester residue, specifically the DMT residue, and having from more than 0 to less than 3.0 wt.% of the residual component, has a heat deflection temperature from 142°C to 162°C when measured at 0.455 MPa in accordance with ASTM method D648.

In another specific embodiment, an article molded from the thermoplastic compositions comprising PBT manufactured from the di(C1-3)alkyl terephthalic ester residue, specifically the DMT residue, and having from more than 0 to less than 1.5 wt.% of the residual component, has (a) a mold shrinkage in the parallel direction ranging from 2.0.% to 2.3%; (b) a melting temperature ranging from 223°C to 227°C; or (c) a combination thereof. The articles of this embodiment can also have one or more of a mold shrinkage in the perpendicular direction ranging from 1.6 % to 2.5 %, a heat deflection temperature at 0.455 MPa ranging from 143 °C to 161°C, a heat deflection temperature at 1.82 MPa ranging from 47°C to 52°C, and/or a crystallization temperature ranging from 173°C to 188°C.

It has also been found that an article molded from the thermoplastic compositions comprising PBT manufactured from the di(C1-3)alkyl terephthalic ester residue, specifically the DMT residue, and from more than 0 to less than 0.9 weight % of the residual component can have a heat deflection temperature ranging from 142°C to 162°C when measured at 0.455 MPa in accordance with ASTM method D648.

In still another embodiment, an article molded from the thermoplastic compositions comprising PBT manufactured from the di(C1-3)alkyl terephthalic ester residue, specifically the DMT residue, and from more than 0 to less than 0.8 weight % of the residual component can have a melting temperature ranging from 224 °C to 227 °C.

One or more of the foregoing properties can be achieved by a thermoplastic polyester composition that consists essentially of the PBT derived from a DMT residue and one or more additives selected from a mold release agent, an antioxidant, a thermal stabilizer, and a UV stabilizer. Further, one or more of the foregoing properties can be achieved by a thermoplastic polyester composition that consists of the PBT derived from a DMT residue and one or more additives selected from a mold release agent, an antioxidant, a thermal stabilizer, and a UV stabilizer.

Also disclosed are extruded, shaped, or molded articles comprising the PBT manufactured from the di(C₁₋₃)alkyl terephthalic ester residue, specifically the DMT residue, such as electric and electronic parts, including, for example, connectors, fans used in electronic devices such as computers, circuit breakers, lamp holders, fusers, power distribution box, enclosures, housings, and power plugs. A method of forming an article comprises extruding, calendaring, molding, or injection molding the thermoplastic polyester composition to form the article. A specific article is a housing, for example for an electrical connector.

Advantageously, our invention provides previously unavailable benefits. It provides thermoplastic PBT compositions derived at least in part from a scrap or recycle polyester, yet desirable properties, including melting temperature, crystallization temperature, heat deflection temperature, and shrinkage that are the same as or similar to compositions containing PBT derived from virgin DMT.

The invention is further illustrated by the following non-limiting examples.

### EXAMPLES

The materials shown in Table 1 were used in the Examples.

**Table 1.**

| Component | Chemical description | Source |
|---|---|---|
| 1,4-Butanediol | Monomer | BASF |
| Cyclohexane dimethanol | Co-monomer (impurity) | Eastman |
| Dimethyl isophthalate | Co-monomer (impurity) | Fisher scientific |
| Dimethyl terephthalate | Monomer | Invista |
| Tetra(isopropyl) titanate | Catalyst | DuPont |
| Triethylene glycol | Co-monomer (impurity) | Fisher Scientific |
| Diethylene glycol | Co-monomer (impurity) | Fisher Scientific |
| Poly(butylene terephthalate) | PBT from virgin DMT | Sabic Innovative Plastics |
| Hindered phenol stabilizer | Antioxidant | Chemtura |
| Hydrocarbon wax release | Mold release | Astor |
| Brominated polycarbonate | Flame retardant polymer | Sabic Innovative Plastics |
| Polycarbonate | Polymer | Sabic Innovative Plastics |
| Antimony oxide concentrate | Flame retardant | Industrial Plastics |
| Low density polyethylene | Mold release | Exxon Mobil |
| SAN encapsulated PTFE intermediate | Anti-drip agent | Sabic Innovative Plastics |
| Zinc phosphate | Quencher | Halox |
| Pentaerythritol beta-lauryl thiopropionate | Mold release agent | Chemtura |
| Anhydrous monosodium phosphate | Quencher | Innophos |
| MBS | Methacrylate-butadiene-styrene impact modifier | Dow Advanced Chemicals |
| 2-(2'hydroxy-5-T-octylphenyl)-benzotriazole | UV stabilizer | Americhem |

### Property Testing Procedures

The melting point, Tₘ, and the crystallization temperature, T_{c}, of the polymers were measured by DSC with a 20 °C/min heating rate. Tₘ was measured on the second heating cycle.

Molecular weight data was measured by gel permeation chromatography using polystyrene standards with a 2000 D cutoff.

Melt volume rate (MVR) of the polymers (dried for 2 hr at 120 °C prior to measurement) was measured according to ISO 1133 method with a dwelling time of 300 s a 0.0825 inch (2.1 mm) orifice at 250 °C with an applied load of 2.16 kg.

Melt viscosity (MV) of the polymer was measured by ISO11443. A multi-point method is used to generate a melt viscosity curve as a function of shear rate.

Intrinsic viscosity (IV) data was obtained for the polymer.

Color data for the polymer was acquired by diffuse reflectance on a Gretag Macbeth Color-Eye 7000A with D65 illumination, 10° observer, CIE L*, a*, b*, specular included, UV included, large lens position, large aperture.

Flexural properties were measured using the ASTM D790 method using bar dimensions of 127 x 12.7 x 3.2 mm, a support span of 50.8 mm, and a test speed of 1.27 mm/min.

Heat Deflection Temperature was tested on five bars having the dimensions 127 x 12.7 x 3.2 mm using ASTM method D648 that uses a loading stress of 0.455 or 1.82 MPa with no prior annealing.

Notched Izod impact testing was done on 76.2 x 12.7 x 3.2 mm bars using ASTM method D256. Bars were notched prior to oven aging; samples were tested at room temperature (23 °C).

Un-notched Izod impact testing was done on 76.2 x 12.7 x 3.2 mm bars using ASTM method D4812. Samples were tested at room temperature (23 °C).

Biaxial impact testing, sometimes referred to as instrumented impact testing, was done as per ASTM D3763 using 101.6 x 3.2 mm molded discs with a test velocity of 3.3 m/s. The total energy absorbed by the sample is reported as J. Testing was done at room temperature (23 °C) on as molded samples.

Mold Shrinkage was tested using 101.6 x 3.2 mm molded discs as per an internal method. Both parallel and perpendicular shrinkage measurements were made.

Tensile modulus and tensile elongation at break were tested on injection molded Type 1 bars with a gage length of 50 mm at room temperature with a crosshead speed of 50 mm/min using ASTM D638.

### PBT Polymerization Process

The polymerization reactions in Examples 1-9 were carried out in a 40CV Helicone reactor. The helicone reactor had a capacity of 200 L and was equipped with a special design of twin opposing helical blades with 270 degree twist; constructed of 316 SS with 16 g polish finish. The blade speed could be varied from 1 to 65 rpm. The agitators were connected to a Constant Torque Inverter Duty Motor, which operates at 230/460 VAC, 3 PH, and 60 Hz. These agitators provided excellent surface area for the polymer melt in order to build molecular weight. The helicone was also designed with an overhead condenser to condense the vapors in the transesterification and polymerization stages. The reactor had a conical design with twin rotating blades with close clearance to the reactor walls. This configuration allowed for efficient mixing of high viscosity polymer melts. The 40 CV Helicone reactor was preheated to 170 °C and loaded with all materials. For all batches 45.5 kg of 1,4-butanediol, 65.9 kg of dimethyl terephthalate, and 53.7 mL of tetra(isopropyl) titanate were added. Once the materials were added and the reactor closed, the temperature was ramped from 170°C to 227°C at 2.5 °C/min. During this stage, the 1,4-butanediol reacted with the dimethyl terephthalate and liberated methanol. Both methanol and excess 1,4-butanediol were collected by means of an overhead condenser with cooling water set to 35 °C. Once the rate of overhead collection slowed considerably, vacuum was slowly applied at a target reduction of 33 mbar/min (3.3 kPa/min) while ramping the temperature from 227 °C to 250 °C. The reactor was held at these conditions throughout the polymerization while the molecular weight of the polymer. Additional 1,4-butanediol was collected using the overhead condenser with cooling water at 55 °C. Once the torque in the reactor measured 15 amps, the agitator motor slowed and vacuum seal was broken. Once the agitator stopped, the polymer was discharged from the reactor. The polymer made in this reactor was ground after cooling using a conventional grinder with a mesh screen.

PBT was prepared in Example 10 on an industrial scale through process steps consisting of 2 main steps. First, the polyethylene terephthalate is depolymerized by reaction with ethylene glycol in a process known as glycolysis. The reaction product is then contacted with 1,4-butanediol under conditions suitable for polymerization.

### Dimethyl Terephthalate Compositions

To make the impurity-containing dimethyl terephthalate residue compositions, the amount of dimethyl terephthalate was kept constant and one or more of the following impurities were added in the appropriate ratio: dimethyl isophthalate, cyclohexane dimethanol, diethylene glycol, triethylene glycol.

### Preparation of Stabilized PBT Compositions

Stabilized PBT was prepared in Examples 11-20 by dry mixing 99.74 weight % (wt.%) PBT from Examples 1-10, 0.06 wt.% hindered phenol stabilizer, and 0.2 wt.% hydrocarbon wax release in a paint shaker for approximately 4 min. The mixture was then extruded on a 27 mm Entek Mega Twin Screw Extruder (with a maximum capacity of 34 kg/hr) having 5 feeders and a vacuum vented mixing screw. The feed temperature was 204 °C. The extrusion temperature was maintained between 204-260 °C. The screw speed was 450 rpm. The extrudate was cooled through a water bath prior to pelletizing. Test parts were injection molded on a van Dorn molding machine. The pellets were dried for 4 hr at 121 °C in a forced air-circulating oven prior to injection molding. Parts for testing were molded with a barrel temperature set to 260 °C and the mold temperature set to 66 °C. ASTM parts were made for all tests. Cycle time was approximately 35 s.

### Preparation of Flame Retardant PBT Compositions

A flame retardant PBT with a very high PBT content was prepared in Examples 21-30 by dry mixing 64.46 wt.% PBT from Examples 1-10, 26.0 wt.% brominated polycarbonate, 2.0 wt.% polycarbonate, 6.1 wt.% antimony oxide concentrate, 1.0 wt.% low density polyethylene, 0.06 wt.% hindered phenol stabilizer, 0.08 wt.% SAN encapsulated PTFE-intermediate, and 0.3 wt.% zinc phosphate in a paint shaker for approximately 4 min. The preparation procedure was otherwise identical to that of Examples 11-20.

### Preparation of Impact Modified Polycarbonate/ PBT Compositions

An impact modified polycarbonate / PBT blend using a high PBT content was prepared in Examples 31-40 by dry mixing 66.32 wt.% PBT from Examples 1-10, 15.0 wt.% polycarbonate, 18.0 wt.% MBS rubber, 0.25 wt.% 2-(2'hydroxy-5-t-octylphenyl)-benzotriazole, 0.08 wt.% hindered phenol stabilizer, 0.05 wt.% pentaerythritol beta-lauryl thiopropionate, and 0.3 wt.% anhydrous monosodium phosphate in a paint shaker for approximately 4 min. The preparation procedure was otherwise the same as Examples 11-20.

### EXAMPLES 1-10

### Examples 1-4.

The purpose of Example 1 (reference example) was to prepare PBT from dimethyl terephthalate residue compositions containing dimethyl isophthalate. More specifically, the dimethyl terephthalate composition was made using the procedure described above, except that the following impurity was added: 3.0 wt.% dimethyl isophthalate.

PBT was prepared from dimethyl terephthalate containing 3.0 wt.% dimethyl isophthalate on a pilot scale with the dimethyl terephthalate being composed of 63.9 kg dimethyl terephthalate and 2.0 kg dimethyl isophthalate. The process steps and conditions were otherwise identical to those described above. The results for Example 1 are in Table 2.

The purpose of Example 2 (reference example) was to prepare PBT from dimethyl terephthalate residue compositions containing cyclohexane dimethanol. More specifically, the dimethyl terephthalate composition was made using the procedure described above, except that the following impurities were added: 1.5 wt.% cyclohexane dimethanol.

PBT was prepared from dimethyl terephthalate containing 1.5 wt.% cyclohexane dimethanol on a pilot scale with the dimethyl terephthalate being composed of 64.9 kg of dimethyl terephthalate and 1.0 kg of cyclohexane dimethanol. The process steps and conditions were otherwise identical to those described above. The results for Example 2 are shown in Table 2.

The purpose of Example 3 was to prepare PBT from dimethyl terephthalate residue compositions containing diethylene glycol and triethylene glycol. More specifically, the dimethyl terephthalate composition was made using the procedure described above, except that the following impurities were added: 0.5 wt.% diethylene glycol and 0.1 wt.% triethylene glycol.

PBT was prepared from dimethyl terephthalate containing 0.5 wt.% diethylene glycol and 0.1 wt.% triethylene glycol on a pilot scale with the dimethyl terephthalate being composed of 65.5 kg of dimethyl terephthalate, 330 g of diethylene glycol and 66 g of triethylene glycol. The process steps and conditions were otherwise identical to those described above. The results for Example 3 are shown in Table 2.

The purpose of Example 4 (reference example) was to prepare PBT from dimethyl terephthalate residue compositions containing dimethyl isophthalate, cyclohexane dimethanol, diethylene glycol, and triethylene glycol. More specifically, the dimethyl terephthalate composition was made using the procedure described above, except that the following impurities were added: 3 wt.% dimethyl isophthalate, 1.5 wt.% cyclohexane dimethanol, 0.5 wt.% diethylene glycol, and 0.1 wt. % triethylene glycol.

PBT was prepared from dimethyl terephthalate containing 3 wt.% dimethyl isophthalate, 1.5 wt.% cyclohexane dimethanol, 0.5 wt.% diethylene glycol, and 0.1 wt.% triethylene glycol on a pilot scale with the dimethyl terephthalate being composed of 62.7 kg of dimethyl terephthalate, 2.0 kg of dimethyl isophthalate, 1.0 kg of cyclohexane dimethanol, 330 g of diethylene glycol and 66 g of triethylene glycol. The process steps and conditions were otherwise identical to those described above. The results for Example 4 are in Table 2.

### Comparative Examples 5-9.

The purpose of Comparative Examples 5-9 was to prepare PBT from dimethyl terephthalate using the procedure described above, but with no impurities added in the dimethyl terephthalate.

PBT was prepared on the pilot scale using 65.0 kg of dimethyl terephthalate. The process steps and testing conditions were otherwise identical to those described above for Examples 1-4. The results for Comparative Examples 5-9 are shown in Table 2.

### Comparative Example 10 (reference example).

The purpose of Comparative Example 10 was to compare PBT made from polyethylene terephthalate. This material is used for comparison purposes with Examples 1-4. While this material is not made from dimethyl terephthalate, this PBT contains a known amount of impurities that are ordinarily present in recycled polyethylene terephthalate sources. The results for Comparative Example 10 are shown in Table 2. Results for Examples 1-4 and Comparative Examples 5-10.

Table 2 shows the measured properties for Examples 1-4 and Comparative Examples 5-10. Amounts are shown in weight percent. Table 2.

The results in Table 2 show that the use of only certain dimethyl terepthalate compositions containing specific levels of impurities produced polybutylene terepthalate having suitable properties.

PBT polymers made in Comparative Examples 5-9 from dimethyl terephthalate were each tested twice. This allowed establishment of total process variation, including testing. This baseline was then used to detect any significant deviation in polymer properties of the materials made in Examples 1-4 from the Comparative Examples. A significant deviation was a property measurement more than 2 standard deviations from the baseline properties established from the Comparative Examples.

The color of polymers made from recycled materials is often an issue.

| Ex. | DMI | CHDM | DEG | TEG | DMT Residual Composition Residue Level | Onset Tₘ (°C) | Onset T_{c} (°C) | L* | a* | b* |
|---|---|---|---|---|---|---|---|---|---|---|
| 1 | 3.0 | 0 | 0 | 0 | 3.0 | 220.6 | 178.0 | 83.91 | 0.849 | 8.41 |
| 2 | 0 | 1.5 | 0 | 0 | 1.5 | 222.1 | 177.8 | 84.31 | 0.702 | 7.93 |
| 3 | 0 | 0 | 0.5 | 0.1 | 0.6 | 224.2 | 177.8 | 85.87 | 0.157 | 5.47 |
| 4 | 3.0 | 1.5 | 0.5 | 0.1 | 5.1 | 216.3 | 168.4 | 86.48 | 0.48 | 6.62 |
| 5 | 0 | 0 | 0 | 0 | 0 | 225.4 | 180.5 | 85.98 | 1.113 | 9.35 |
| 6 | 0 | 0 | 0 | 0 | 0 | 223.9 | 186.9 | 86.69 | 0.509 | 6.44 |
| 7 | 0 | 0 | 0 | 0 | 0 | 225.5 | 177.6 | 89.56 | -0.039 | 3.77 |
| 8 | 0 | 0 | 0 | 0 | 0 | 225.8 | 176.3 | 87.54 | -0.094 | 3.64 |
| 9 | 0 | 0 | 0 | 0 | 0 | 225.4 | 182.2 | 87.36 | -0.201 | 4.15 |
| 10 | n/d | n/d | n/d | n/d | 4.1 | 215.7 | 174.9 | 73.64 | -2.025 | 2.77 |

| | | | | | | | | | | |
|---|---|---|---|---|---|---|---|---|---|---|
| The L*, a*, b* measurements for the produced polymers are given in Table 3. Comparative Example 10 gives results that are typical of PBT made from recycled polyethylene terephthalate sources by glycolysis. The color measurements for Examples 1-4 are all within the normal process variation. Presence of the co-monomers in the amounts used in Examples 1-4 does not have a significant adverse effect on the color of the produced PBT. | | | | | | | | | | |

**Table 3. Comparison of polymer color of Examples 1-4 to baseline PBT.**

| Ex. | Co-monomers | L* | a* | b* |
|---|---|---|---|---|
| 1 | 3% DMI | 84 | 0.8 | 8.4 |
| 2 | 1.5% CHDM | 84 | 0.7 | 7.9 |
| 3 | 0.5% DEG, 0.1% TEG | 86 | 0.2 | 5.5 |
| 4 | 3% DMI, 1.5% CHDM, 0.5% DEG, 0.1% TEG | 86 | 0.5 | 6.6 |
| 5-9 | None | 84-91 | -0.9 - 1.3 | 0.9 - 9.3 |
| 10 | 4.1 % Total | 74 | -2.0 | 2.8 |

In the pilot scale helicone reactor, the molecular weight of the polymer was not tightly controlled. Any dependence of melt viscosity, melt volume rate, and intrinsic viscosity on the impurities in dimethyl terephthalate was insignificant compared to the molecular weight variations inherent to the process.

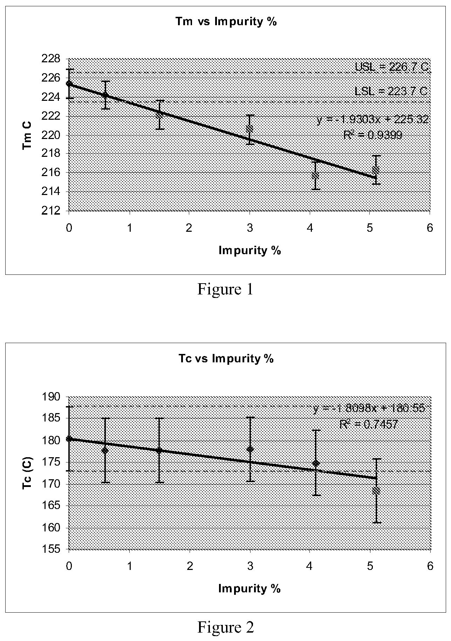

The melting point (Tₘ) and the crystallization temperature (T_{c}) of the polymers made in Examples 1-10 as a function of dimethyl terephthalate impurity are shown in Figure 1 and Figure 2, respectively. The points at 0 wt.% impurity correspond to the average of the 5 batches of PBT made from virgin dimethyl terephthalate in Examples 5-9, each measured twice. The standard deviation for the process was calculated from the PBT made from virgin dimethyl terephthalate. The error bars on the points are given as 2 process standard deviations on each side. The specifications shown in the Figures correspond to 2 standard deviations on either side of the standard PBT. These are included to see if a significant change in the measured property occurs due to the impurities in the dimethyl terephthalate. Points marked with squaresindicate measurements that are significantly different than the baseline established using Examples 5-9. Both Tₘ and T_{c} show a dependence upon the amount of impurities in the dimethyl terephthalate used to make PBT. The effect of impurities on Tₘ is much stronger than their effect on T_{c} relative to the process standard deviation and has a linear relationship between the Tₘ and the impurity level. From the thermal data, it does not appear that the type of impurity has an impact, only the total amount of impurity in the dimethyl terephthalate. Surprisingly, even very low impurity levels result in significant changes to the Tₘ of the polymer. Surprisingly, if the total amount of impurities present in the dimethyl terephthalate is more than only 0.8 wt.%, the PBT will have a significantly different melting point. To ensure that the PBT made from recycled dimethyl terephthalate has equivalent melting point properties, the recycled dimethyl terephthalate must contain less than 0.8 wt.% of the impurities.

### EXAMPLES 11-20

### Examples 11-14.

The purpose of Example 11 (reference example) was to prepare stabilized PBT from PBT made from dimethyl terephthalate residue compositions containing dimethyl isophthalate. More specifically, the stabilized PBT composition was prepared using PBT made from dimethyl terephthalate residue compositions containing 3.0 wt.% dimethyl isophthalate from Example 1, hindered phenol stabilizer, and hydrocarbon wax release according to the procedure described above. The testing procedures were identical to those described above. The results for Example 11 are shown in Table 4.

The purpose of Example 12 (reference example) was to prepare stabilized PBT from PBT made from dimethyl terephthalate residue compositions containing cyclohexane dimethanol. More specifically, the stabilized PBT composition was prepared using PBT made from dimethyl terephthalate residue compositions containing 1.5 wt.% cyclohexane dimethanol from Example 2, hindered phenol stabilizer, and hydrocarbon wax release according to the procedure described above. The process steps and conditions were otherwise identical to those described above. The results for Example 12 are shown in Table 4.

The purpose of Example 13 was to prepare stabilized PBT from PBT made from dimethyl terephthalate residue compositions containing diethylene glycol and triethylene glycol. More specifically, the stabilized PBT composition was prepared using PBT prepared using dimethyl terephthalate residue compositions containing 0.5 wt.% diethylene glycol and 0.1 wt.% triethylene glycol from Example 3, hindered phenol stabilizer, and hydrocarbon wax release according to the procedure described above. The process steps and conditions were otherwise identical to those described above. The results for Example 13 are shown in Table 4.

The purpose of Example 14 (reference example) was to prepare stabilized PBT from PBT made from dimethyl terephthalate residue compositions containing dimethyl isophthalate, cyclohexane dimethanol, diethylene glycol, and triethylene glycol. More specifically, the stabilized PBT composition was prepared using PBT prepared from dimethyl terephthalate residue compositions containing 3 wt.% dimethyl isophthalate, 1.5 wt.% cyclohexane dimethanol, 0.5 wt.% diethylene glycol and 0.1 wt.% triethylene glycol from Example 4, hindered phenol stabilizer, and hydrocarbon wax release. The process steps and conditions were otherwise identical to those described above. Results for Example 14 are in Table 4.

### Comparative Examples 15-19.

The purpose of Comparative Examples 15-19 was to establish baseline process variation for the production of stabilized PBT compositions made from virgin dimethyl terephthalate, a material that contained substantially less of the impurities that were found in the dimethyl terephthalate residue compositions. The stabilized PBT was prepared from PBT made from the dimethyl terephthalate residues without added impurities in Comparative Examples 5-9, hindered phenol stabilizer, and hydrocarbon wax release according to the procedure described above. The process steps and conditions were otherwise identical to those described above. The results for Comparative Examples 15-19 are shown in Table 4.

### Comparative Example 20.

The purpose of Comparative Example 20 was to compare stabilized PBT compositions comprising PBT made from recycled polyethylene terephthalate. This material is used for comparison purposes with Examples 11-14. While this material is not made from dimethyl terephthalate, this stabilized PBT contains a known amount of impurities that are ordinarily present in recycled polyethylene terephthalate sources. The stabilized PBT was prepared using PBT made from polyethylene terephthalate from Comparative Example 10, hindered phenol stabilizer, and hydrocarbon wax release according to the procedure described above. The process steps and conditions were otherwise identical to those described above. The results for Comparative Example 20 are shown in Table 4.

Table 4 shows the results for stabilized PBT made in Examples 11-20.

**Table 4.**

| | |
|---|---|
| FM -flexural modulus | NIIS- Notched Izod impact strength, |
| UIIS - Unnotched Izod impact strength | E - modulus of elasticity |
| MSP11 - Mold shrinkage in the parallel direction, | ε_{y} - elongation at break |
| MSPpn - Mold shrinkage in the perpendicular direction | |

Stabilized PBT polymers made in Comparative Examples 15-19 containing PBT produced from dimethyl terephthalate were each extruded, molded, and tested twice. This allowed establishment of total process variation, including testing. This baseline was then used to detect any significant deviation in polymer properties of the materials made in Examples 11-14 from the Comparative Examples 15-19. A significant deviation was a property measurement more than 2 standard deviations from the baseline

| Ex. | DMT Residual Level | FM (MPa) | 0.455 MPa HDT (°C) | 1.82 MPa HDT (°C) | NIIS (J/m) | UIIS (J/m) | Total Energy (J) | MS Pll (%) | MS Ppn (%) | E (MPa) | ε_{y} (%) |
|---|---|---|---|---|---|---|---|---|---|---|---|
| 11 | 3.0 | 2520 | 113.5 | 46.8 | 49.6 | 2130 | 56.1 | 1.97 | 1.52 | 2770 | 190.8 |
| 12 | 1.5 | 2510 | 141 | 49.8 | 49 | 2100 | 51.7 | 1.96 | 1.59 | 2690 | 246.4 |
| 13 | 0.6 | 2540 | 145.7 | 49.3 | 49.5 | 2130 | 64.8 | 2.06 | 2.08 | 2770 | 96.1 |
| 14 | 5.1 | 2470 | 120.9 | 46.2 | 51 | 2090 | 45.9 | 1.94 | 1.85 | 2690 | 283.6 |
| 15 | 0 | 2590 | 155 | 49.9 | 49.5 | 1750 | 29.4 | 2.27 | 2.23 | 2850 | 6.9 |
| 16 | 0 | 2570 | 151.8 | 49.1 | 28.3 | 2040 | 12.8 | 2.08 | 2.15 | 2810 | 68.8 |
| 17 | 0 | 2480 | 146.8 | 47.7 | 37.8 | 1830 | 41.5 | 2.17 | 2.2 | 2720 | 123.5 |
| 18 | 0 | 2580 | 153.3 | 52.1 | 27.2 | 572 | 4.54 | 2.16 | 2.15 | 2810 | 5.3 |
| 19 | 0 | 2490 | 148.5 | 48.9 | 26.4 | 2140 | 77.8 | 2.11 | 2.18 | 2650 | 89.8 |
| 20 | 4.1 | 2540 | 115.2 | 46.6 | 51.9 | 2140 | 4.503 | 2.02 | 2.04 | 2730 | 276 |

properties established from the Comparative Examples 15-19.

Measurements of flexural modulus, notched Izod impact strength, unnotched Izod impact strength, and the modulus of elasticity for Examples 11-20 are all within the normal process variation. The presence of the co-monomers in the amounts used in Examples 1-4 does not have a significant adverse effect on these properties of the stabilized PBT compositions.

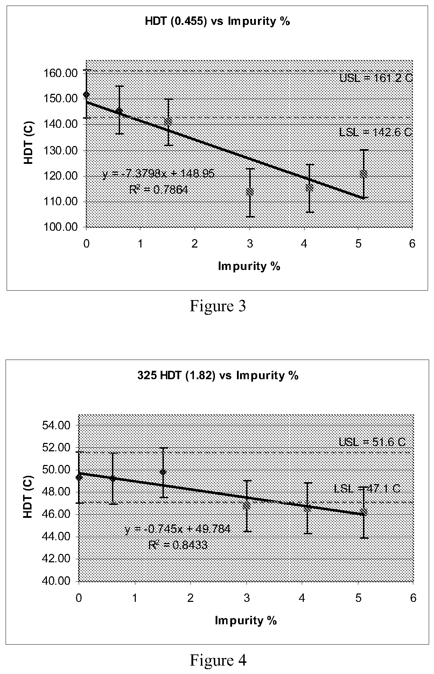

The heat deflection temperature measurements of the stabilized PBT polymers with a loading stress of 0.455 MPa and 1.82 MPa are shown in Figure 3 and Figure 4, respectively. Points marked with squares indicate measurements that are significantly different than the baseline established using Examples 15-19. The heat deflection temperature measurements for Examples 11-14 show a significant reduction when impurities are present in the dimethyl terephthalate used to make the stabilized PBT. Surprisingly, the presence of the co-monomers in the amounts used in Examples 1-4 does have a significant adverse effect on the heat deflection temperature of the produced stabilized PBT. This is believed to be due to incorporation of the impurities as co-monomers in the polymer backbone resulting in a decrease in the crystallinity of the polymer. Surprisingly, even low impurity levels result in significant changes to the heat deflection temperature of the polymer. If the total impurities present in the dimethyl terephthalate are more than only 0.9 wt.%, the stabilized PBT may have a significantly different heat deflection temperature. To ensure that the stabilized PBT made from recycled dimethyl terephthalate has an equivalent heat deflection temperature, the recycled dimethyl terephthalate must contain less than 0.9 wt.% of impurities.

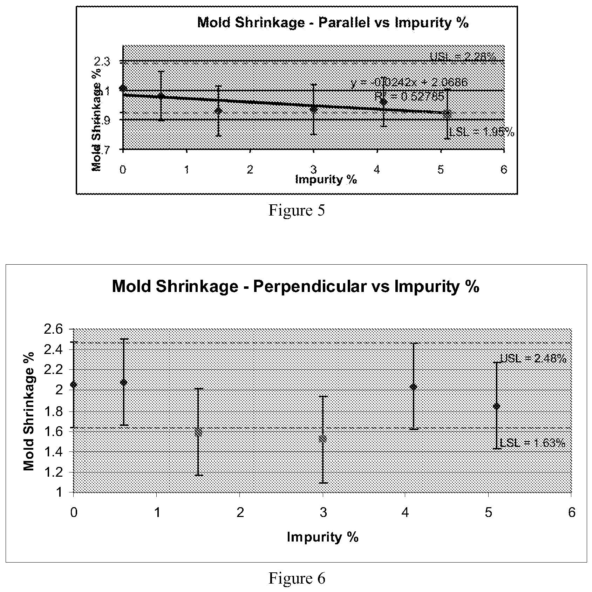

The mold shrinkage measurements in the parallel direction and in the perpendicular direction of the stabilized PBT compositions are shown in Figure 5 and Figure 6, respectively. Both the mold shrinkage measurements in the parallel direction and in the perpendicular direction show a dependence upon the amount of impurities in the dimethyl terephthalate used to make PBT. Surprisingly, even low impurity levels result in significant changes to the mold shrinkage of the polymer. This is also believed to be due to incorporation of the impurities as co-monomers in the polymer backbone resulting in a decrease in the crystallinity of the polymer. If the total impurities present in the dimethyl terephthalate are more than only 5.1 wt.% the stabilized PBT may have significantly different mold shrinkage in the parallel direction and if the total impurities present in the dimethyl terephthalate are more than only 1.5 wt.% the stabilized PBT may have significantly different mold shrinkage in the perpendicular direction. To ensure that the stabilized PBT made from recycled dimethyl terephthalate has equivalent mold shrinkage, the recycled dimethyl terephthalate must contain less than 1.5 wt.% of impurities.

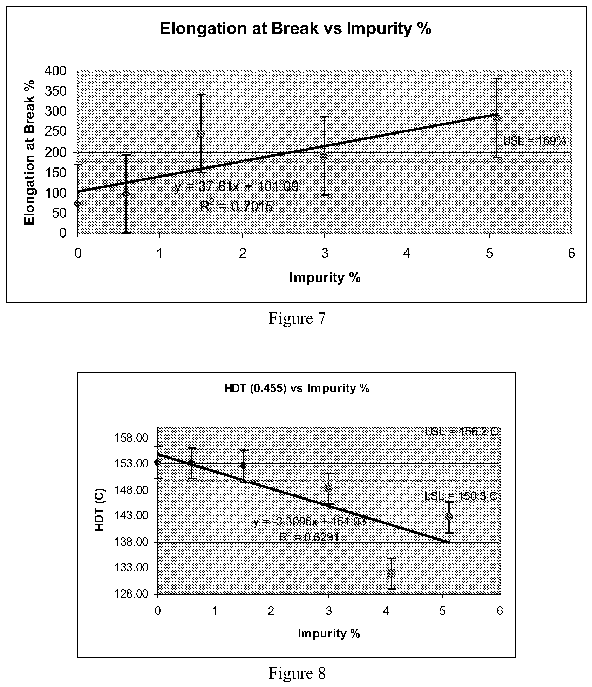

The tensile elongation at break measurements of the stabilized PBT compositions are shown in Figure 7. The tensile elongation at break measurements show a dependence upon the amount of impurities in the dimethyl terephthalate used to make PBT. Surprisingly, even low impurity levels result in significant changes to the elongation at break of the polymer. If the total impurities present in the dimethyl terephthalate are more than only 1.5 wt.%, the stabilized PBT may have significantly different elongation at break. To ensure that the stabilized PBT made from recycled dimethyl terephthalate has equivalent elongation at break, the recycled dimethyl terephthalate must contain less than 1.5 wt.% of impurities.

To ensure that the stabilized PBT made from dimethyl terephthalate residual compositions has equivalent heat deflection properties, tensile elongation at break, and mold shrinkage in the perpendicular and parallel directions, as well as flexural modulus, notched Izod impact strength, un-notched Izod impact strength, mold shrinkage in both the parallel and perpendicular directions, the modulus of elasticity, and elongation at break, the recycled dimethyl terephthalate must contain less than 0.9 wt.% of impurities.

### EXAMPLES 21-30

### Examples 21-24

The purpose of Example 21 (reference example) was to prepare a flame retardant PBT with a very high PBT content made from dimethyl terephthalate residue compositions. More specifically, the flame retardant was prepared using PBT made from dimethyl terephthalate residue compositions containing 3.0 wt.% dimethyl isophthalate from Example 1, brominated polycarbonate, polycarbonate, hindered phenol stabilizer, antimony oxide concentrate, SAN encapsulated PTFE-intermediate, low density polyethylene, and zinc phosphate according to the procedure described above. The process steps and conditions were otherwise identical to those described above. The results for Example 21 are shown in Table 5.

The purpose of Example 22 (reference example) was to prepare a flame retardant PBT with a very high PBT content from PBT made from dimethyl terephthalate residue compositions containing cyclohexane dimethanol. More specifically, the flame retardant was prepared using PBT made from dimethyl terephthalate residue compositions containing 1.5 wt.% cyclohexane dimethanol from Example 2, brominated polycarbonate, polycarbonate, hindered phenol stabilizer, antimony oxide concentrate, SAN encapsulated PTFE-intermediate, low density polyethylene, and zinc phosphate according to the procedure described above. The process steps and conditions were otherwise identical to those described above. The results for Example 22 are shown in Table 5.

The purpose of Example 23 was to prepare a flame retardant PBT with a very high PBT content from PBT made from dimethyl terephthalate residue compositions containing diethylene glycol and triethylene glycol. More specifically, the flame retardant was prepared using PBT made from dimethyl terephthalate residue compositions containing 0.5 wt.% diethylene glycol and 0.1 wt.% triethylene glycol from Example 3, brominated polycarbonate, polycarbonate, hindered phenol stabilizer, antimony oxide concentrate, SAN encapsulated PTFE-intermediate, low density polyethylene, and zinc phosphate according to the procedure described above. The process steps and conditions were otherwise identical to those described above. The results for Example 23 are shown in Table 5.

The purpose of Example 24 (reference example) was to prepare a flame retardant with a very high PBT content from PBT made from dimethyl terephthalate residue compositions containing dimethyl isophthalate, cyclohexane dimethanol, diethylene glycol, and triethylene glycol. More specifically, the flame retardant was prepared using PBT made from dimethyl terephthalate residue compositions containing 3.0 wt.% dimethyl isophthalate, 1.5 wt.% cyclohexane dimethanol, 0.5 wt.% diethylene glycol and 0.1 wt.% triethylene glycol from Example 4, brominated polycarbonate, polycarbonate, hindered phenol stabilizer, antimony oxide concentrate, SAN encapsulated PTFE-intermediate, low density polyethylene, and zinc phosphate according to the procedure described above. The process steps and conditions were otherwise identical to those described above. The results for Example 24 are shown in Table 4.

### Comparative Examples 25-29

The purpose of Comparative Examples 25-29 was to establish baseline process variation for the production of a flame retardant with a very high PBT content produced from the polymer made from virgin dimethyl terephthalate, a material that contained substantially less of the impurities that were found in the dimethyl terephthalate residue compositions. This material is used for comparison with Examples 21-24. The flame retardant PBT was prepared using PBT made from dimethyl terephthalate from Comparative Examples 5-9, brominated polycarbonate, polycarbonate, hindered phenol stabilizer, antimony oxide concentrate, SAN encapsulated PTFE-intermediate, low density polyethylene, and zinc phosphate according to the procedure described above. PBT is made from virgin dimethyl terephthalate using the same processing and testing conditions as used in Examples 21-24. The results for Comparative Examples 25-29 are shown in Table 5. Comparative Example 30 (reference example)

The purpose of Example 30 was to compare a flame retardant with a very high PBT content made from PBT made from polyethylene terephthalate. This material is used for comparison purposes with Examples 21-24. While this material is not made from dimethyl terephthalate, this flame retardant with a very high PBT content contains a known amount of impurities that are ordinarily present in recycled polyethylene terephthalate sources. The flame retardant PBT was prepared using polyethylene terephthalate from comparative Example 10, brominated polycarbonate, polycarbonate, hindered phenol stabilizer, antimony oxide concentrate, SAN encapsulated PTFE-intermediate, low density polyethylene, and zinc phosphate according to the procedure described above. The testing procedures were identical to those described above. The results for Comparative Example 30 are shown in Table 5.

Table 5 shows the results for stabilized PBT made in Examples 21-30.

**Table 5.**

| | |
|---|---|
| FM -flexural modulus | NIIS- Notched Izod impact strength, |
| UIIS - Unnotched Izod impact strength | E - modulus of elasticity |
| MSP11 - Mold shrinkage in the parallel direction, | ε_{y} - elongation at break |
| MSPpn - Mold shrinkage in the perpendicular direction | |

Flame retardant PBT compositions of Comparative Examples 25-29 made from PBT from dimethyl terephthalate were each extruded, molded, and tested twice. This allowed establishment of total process variation, including testing. This baseline was then used to detect any significant deviation in properties of the materials made in Examples 21-24 from the Comparative Examples 25-29. A significant deviation was a property

| Ex. | DMT Residual Composition Level | FM (MPa) | 0.455 MPa HDT (°C) | 1.82 MPa HDT (°C) | NIIS (J/m) | UIIS (J/m) | Total Energy (J) | MS Pll (%) | MSPpn (%) | E (MPa) | ε_{y} (%) |
|---|---|---|---|---|---|---|---|---|---|---|---|
| 21 | 3.0 | 2710 | 148.3 | 66.1 | 53.4 | 1470 | 23.4 | 1.6 | 1.6 | 2920 | 11.1 |
| 22 | 1.5 | 2690 | 152.7 | 68.1 | 49.6 | 1290 | 8.86 | 1.55 | 1.55 | 2870 | 4.9 |
| 23 | 0.6 | 2720 | 153.2 | 75.2 | 51 | 1490 | 51.6 | 1.58 | 1.58 | 2920 | 8.7 |
| 24 | 5.1 | 2640 | 142.8 | 60.4 | 54.8 | 1630 | 7.66 | 1.49 | 1.43 | 2830 | 6.6 |
| 25 | 0 | 2710 | 154.5 | 69.8 | 51.9 | 1520 | 22.1 | 1.62 | 1.61 | 2910 | 5.4 |
| 26 | 0 | 2670 | 153.4 | 68.8 | 30.4 | 1810 | 29.3 | 1.81 | 1.85 | 2830 | 10.3 |
| 27 | 0 | 2680 | 154.4 | 70.2 | 33.1 | 1470 | 36.7 | 1.82 | 1.84 | 2830 | 9.5 |
| 28 | 0 | 2700 | 154.9 | 70.1 | 30.8 | 1920 | 40.5 | 1.88 | 1.9 | 2850 | 14 |
| 29 | 0 | 2660 | 152.4 | 65.1 | 30.8 | 1770 | 54 | 1.81 | 1.83 | 2820 | 15.2 |
| 30 | 4.1 | 2710 | 132 | 61.2 | 55.9 | 2130 | 63.5 | 1.38 | 1.37 | 2900 | 24.9 |

measurement more than 2 standard deviations from the baseline properties established from the Comparative Examples 25-29. The points at 0 wt.% impurity correspond to the average of the 5 batches using PBT made from virgin dimethyl terephthalate in Examples 25-29, each measured twice. Points marked with squares indicate measurements that are significantly different than the baseline established using Examples 25-29.

Measurements of the flexural modulus, notched Izod impact strength, un-notched Izod impact strength, mold shrinkage in the parallel and perpendicular directions, modulus of elasticity, and tensile elongation at break of the produced flame retardant with a very high PBT content do not show any correlation that depends on the amount of impurities present. Presence of the co-monomers in the amounts used in Examples 1-4 does not have a significant adverse effect on these properties of the produced flame retardant with a very high PBT content.

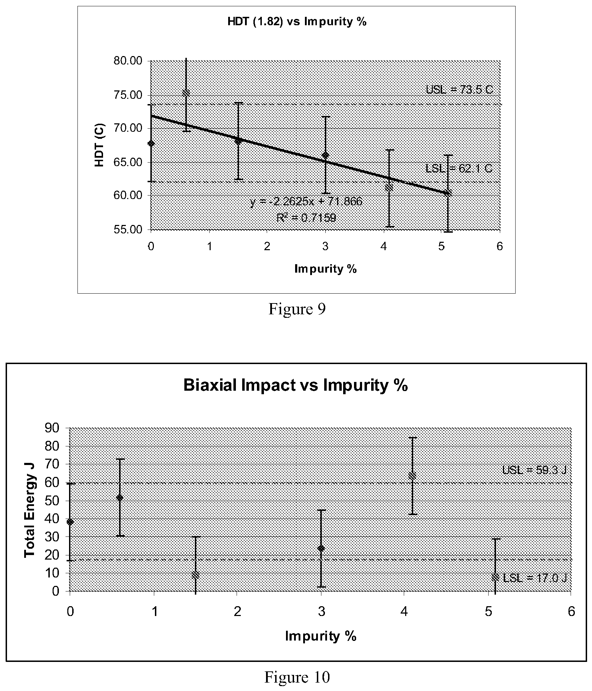

The heat deflection temperature measurements of the produced flame retardant with a very high PBT content with a loading stress of 0.455 MPa and 1.82 MPa are given in Figure 8 and Figure 9, respectively. The heat deflection temperature measurements for Examples 21-24 show a significant reduction when impurities are present in the dimethyl terephthalate used to make the flame retardant with a very high PBT content. Surprisingly, the presence of the co-monomers in the amounts used in Examples 1-4 does have a significant adverse effect on the heat deflection temperature of the produced flame retardant with a very high PBT content. This is believed to be due to incorporation of the impurities as co-monomers in the PBT backbone resulting in a decrease in the crystallinity of the polymer. Surprisingly, even low impurity levels result in significant changes to the heat deflection temperature of the flame retardant with a very high PBT content. If the total impurities present in the dimethyl terephthalate are more than only 1.4 wt.%, the flame retardant with a very high PBT content may have a significantly different heat deflection temperature. To ensure that the flame retardant with a very high PBT content made from recycled dimethyl terephthalate has an equivalent heat deflection temperature, the recycled dimethyl terephthalate must contain less than 1.4 wt.% of impurities.

The total energy measurements from the biaxial impact test of the produced flame retardant with a very high PBT content are given in Figure 10. The total energy measurements for Examples 21-24 do not have a correlation to the amount of impurities present in the dimethyl terephthalate used to make the PBT. However, three of the examples do have total energy measurements from the biaxial impact test that are significantly different than the Comparative Examples. If the total impurities present in the dimethyl terephthalate are more than only 1.5 wt.%, the flame retardant with a very high PBT content may have a significantly different total energy measured by the biaxial impact test. To ensure that the flame retardant with a very high PBT content made from recycled dimethyl terephthalate has equivalent properties, the recycled dimethyl terephthalate must contain less than 1.5 wt.% of impurities

### EXAMPLES 31-40

### Examples 31-34

The purpose of Example 31 (reference example) was to prepare an impact modified polycarbonate / PBT blend using a high PBT content from PBT made from dimethyl terephthalate residue compositions containing dimethyl isophthalate. More specifically, the impact modified polycarbonate / PBT blend was prepared using PBT made from dimethyl terephthalate residue compositions containing 3.0 wt.% dimethyl isophthalate from Example 1, polycarbonate, MBS, 2-(2'hydroxy-5-t-octylphenyl)-benzotriazole, hindered phenol stabilizer, pentaerythritol beta-lauryl thiopropionate, and anhydrous monosodium phosphate according to the procedure described above. The process steps and conditions were otherwise identical to those described above. The results for Example 31 are in Table 5.

The purpose of Example 32 (reference example) was to prepare an impact modified polycarbonate / PBT blend using a high PBT content from PBT made from dimethyl terephthalate residue compositions containing cyclohexane dimethanol. More specifically, the impact modified polycarbonate / PBT blend was prepared using PBT made from dimethyl terephthalate residue compositions containing 1.5 wt.% cyclohexane dimethanol from Example 2, polycarbonate, MBS, 2-(2'hydroxy-5-t-octylphenyl)-benzotriazole, hindered phenol stabilizer, pentaerythritol beta-lauryl thiopropionate, and anhydrous monosodium phosphate according to the procedure described above. The process steps and conditions were otherwise identical to those described above. The results for Example 32 are in Table 6.

The purpose of Example 33 was to prepare an impact modified polycarbonate / PBT blend using a high PBT content from PBT made from dimethyl terephthalate residue compositions containing diethylene glycol and triethylene glycol. More specifically, the impact modified polycarbonate / PBT blend was prepared using PBT made from dimethyl terephthalate residue compositions containing 0.5 wt.% diethylene glycol and 0.1 wt.% triethylene glycol from Example 3, polycarbonate, MBS rubber, 2-(2'hydroxy-5-t-octylphenyl)-benzotriazole, hindered phenol stabilizer, pentaerythritol beta-lauryl thiopropionate, and anhydrous monosodium phosphate according to the procedure described above. The process steps and conditions were otherwise identical to those described above. The results for Example 33 are shown in Table 6.

The purpose of Example 34 (reference example) was to prepare an impact modified polycarbonate/PBT blend using a high PBT content from PBT made from dimethyl terephthalate residue compositions containing dimethyl isophthalate, cyclohexane dimethanol, diethylene glycol, and triethylene glycol. More specifically, the impact modified polycarbonate / PBT blend was prepared using PBT made from dimethyl terephthalate residue compositions containing 3.0 wt.% dimethyl isophthalate, 1.5 wt.% cyclohexane dimethanol, 0.5 wt.% diethylene glycol and 0.1 wt.% triethylene glycol from Example 4, polycarbonate, MBS rubber, 2-(2'hydroxy-5-t-octylphenyl)-benzotriazole, hindered phenol stabilizer, pentaerythritol beta-lauryl thiopropionate, and anhydrous monosodium phosphate according to the procedure described above. The process steps and conditions were otherwise identical to those described above. The results for Example 34 are in Table 6. Comparative Examples 35-39

The purpose of Comparative Examples 35-39 was to establish baseline process variation for the production of an impact modified with a polycarbonate / PBT blend using a high PBT content produced from the polymer made from virgin dimethyl terephthalate, a material that contained substantially less of the impurities that were found in the dimethyl terephthalate residue compositions. The impact modified with a polycarbonate/PBT blend was prepared using a high PBT content from PBT made from dimethyl terephthalate from Comparative Examples 5-9, polycarbonate, MBS rubber, 2-(2'hydroxy-5-t-octylphenyl)-benzotriazole, hindered phenol stabilizer, pentaerythritol beta-lauryl thiopropionate, and anhydrous monosodium phosphate according to the procedure described above. The process steps and conditions were otherwise identical to those described above. This material is used for comparison purposes with Examples 31-34. The results for Comparative Examples 35-39 are shown in Table 6.

### Comparative Example 40 (reference example)

The purpose of Comparative Example 40 was to compare an impact modified polycarbonate / PBT blend using a high PBT content from PBT made from polyethylene terephthalate. This material is used for comparison purposes with Examples 31-34. While this material is not made from dimethyl terephthalate, this impact modified with a polycarbonate / PBT blend using a high PBT content contains a known amount of impurities that are ordinarily present in recycled polyethylene terephthalate sources. The impact modified with a polycarbonate / PBT blend was prepared using a high PBT content from PBT made from polyethylene terephthalate from Comparative Example 10, polycarbonate, MBS rubber, 2-(2'hydroxy-5-t-octylphenyl)-benzotriazole, hindered phenol stabilizer, pentaerythritol beta-lauryl thiopropionate, and anhydrous monosodium phosphate according to the procedure described above. The testing procedures were identical to those described above. The results for Comparative Example 40 are shown in Table 6.

Table 6 shows the properties for an impact modified polycarbonate / PBT blend using a high PBT content of Examples 31-40.

**Table 6.**

| Ex. | DMT Residual Composition Level | FM (MPa) | 0.455 MPa HDT (°C) | 1.82 MPa HDT (°C) | NIIS (J/m) | UIIS (J/m) | Total Energy (J) | MSPll (%) | MSPpn (%) | E (MPa) | ε_{y} (%) |
|---|---|---|---|---|---|---|---|---|---|---|---|
| 31 | 3.0 | 1840 | 93.6 | 52.1 | 786 | 2040 | 52.7 | 1.44 | 1.43 | 1790 | 147.6 |
| 32 | 1.5 | 1830 | 96.4 | 53.3 | 755 | 1940 | 53.3 | 1.44 | 1.42 | 1750 | 71.6 |
| 33 | 0.6 | 1800 | 95.6 | 53.3 | 791 | 1970 | 56.5 | 1.45 | 1.44 | 1780 | 96.2 |
| 34 | 5.1 | 1780 | 82.5 | 51.4 | 858 | 1870 | 54.6 | 1.45 | 1.47 | 1710 | 155.1 |
| 35 | 0 | 1860 | 100.6 | 55.2 | 810 | 2040 | 54.6 | 1.52 | 1.5 | 1810 | 87.2 |
| 36 | 0 | 1770 | 95.2 | 52.8 | 838 | 1920 | 56.4 | 1.43 | 1.44 | 1780 | 178.9 |
| 37 | 0 | 1770 | 95.9 | 52.8 | 872 | 2050 | 56.2 | 1.51 | 1.53 | 1750 | 235.3 |
| 38 | 0 | 1740 | 93.8 | 52.7 | 823 | 1920 | 53.1 | 1.46 | 1.53 | 1730 | 103.4 |
| 39 | 0 | 1760 | 91.2 | 53.9 | 836 | 2040 | 56.3 | 1.45 | 1.45 | 1780 | 126.9 |
| 40 | 4.1 | 1760 | 87.8 | 51.9 | 842 | 2000 | 55.6 | 1.37 | 1.35 | 1660 | 236.2 |

| | | | | | | | | | | | |
|---|---|---|---|---|---|---|---|---|---|---|---|
| FM -flexural modulus UIIS - Unnotched Izod impact strength MSPll - Mold shrinkage in the parallel direction, MSPpn - Mold shrinkage in the perpendicular direction NIIS- Notched Izod impact strength, E - modulus of elasticity ε_{y} - elongation at break | | | | | | | | | | | |

Impact modified polycarbonate / PBT polymers made using a high PBT content made in Comparative Examples 35-39 made from PBT from dimethyl terephthalate were each extruded, molded, and tested twice. This allowed establishment of total process variation, including testing. This baseline was then used to detect any significant deviation in properties of the materials made in Examples 31-34 from the Comparative Examples 35-39. A significant deviation was a property measurement more than 2 standard deviations from the baseline properties established from the Comparative Examples 35-39. The points at 0 wt.% impurity correspond to the average of the 5 batches using PBT made from virgin dimethyl terephthalate in Examples 35-39, each measured twice. Points marked with squares indicate measurements that are significantly different than the baseline established using Examples 35-39.

Measurements of the flexural modulus, notched Izod impact strength, un-notched Izod impact strength, total energy measured by the biaxial impact test, mold shrinkage in the parallel and perpendicular directions, modulus of elasticity, and tensile elongation at break of the produced impact modified with a polycarbonate / PBT blend using a high PBT content do not show any correlation that depends on the amount of impurities present. Presence of the co-monomers in the amounts used in Examples 1-4 does not have a significant adverse effect on these properties of the produced impact modified with a polycarbonate / PBT blend using a high PBT content.

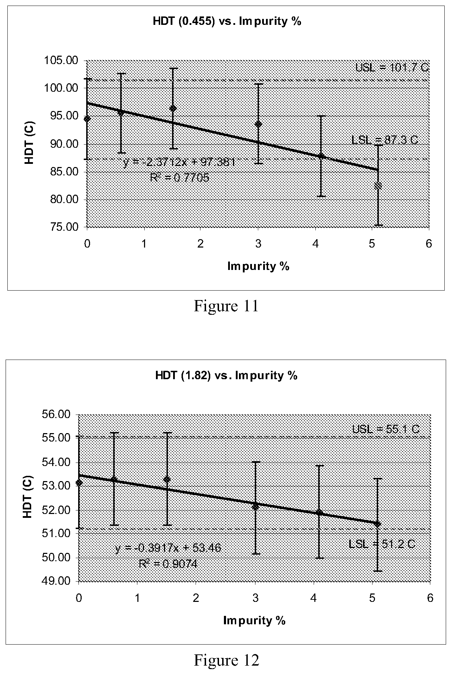

The heat deflection temperature measurements of the produced impact modified with a polycarbonate / PBT blend using a high PBT content with a loading stress of 0.455 MPa and 1.82 MPa are given in Figure 11 and Figure 12, respectively. The heat deflection temperature measurements for Examples 31-34 show a significant reduction when impurities are present in the dimethyl terephthalate used to make the impact modified with a polycarbonate / PBT blend using a high PBT content. Surprisingly, the presence of the co-monomers in the amounts used in Examples 1-4 does have a significant adverse effect on the heat deflection temperature of the produced impact modified with a polycarbonate / PBT blend using a high PBT content. This is believed to be due to incorporation of the impurities as co-monomers in the PBT backbone resulting in a decrease in the crystallinity of the polymer. Surprisingly, even low impurity levels result in significant changes to the heat deflection temperature of the impact modified with a polycarbonate / PBT blend using a high PBT content. If the total impurities present in the dimethyl terephthalate are more than only 4.2 wt.%, the impact modified with a polycarbonate / PBT blend using a high PBT content may have a significantly different heat deflection temperature. To ensure that the impact modified with a polycarbonate / PBT blend using a high PBT content made from recycled dimethyl terephthalate has an equivalent heat deflection temperature, the recycled dimethyl terephthalate must contain less than 4.2 wt.% of impurities.

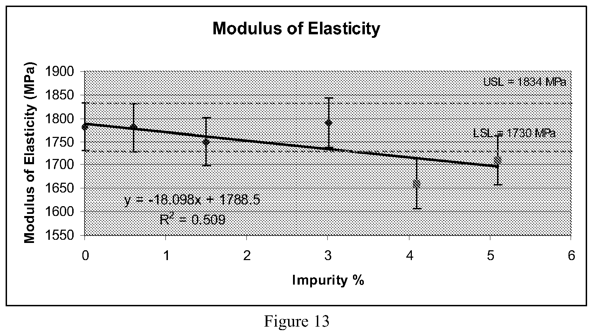

The modulus of elasticity measurements of the produced impact modified with a polycarbonate / PBT blend using a high PBT content are given in Figure 13. The modulus of elasticity measurements for Examples 31-34 show a significant reduction when impurities are present in the dimethyl terephthalate used to make the impact modified with a polycarbonate / PBT blend using a high PBT content. Surprisingly, the presence of the co-monomers in the amounts used in Examples 1-4 does have a significant adverse effect on the modulus of elasticity of the produced impact modified with a polycarbonate / PBT blend using a high PBT content. If the total impurities present in the dimethyl terephthalate are more than only 3.2 wt.%, the impact modified with a polycarbonate / PBT blend using a high PBT content may have a significantly different total energy measured by the biaxial impact test. To ensure that the impact modified with a polycarbonate / PBT blend using a high PBT content made from recycled dimethyl terephthalate has an equivalent modulus of elasticity, the recycled dimethyl terephthalate must contain less than 3.2 wt.% of impurities. To ensure that the impact modified with a polycarbonate / PBT blend using a high PBT content made from recycled dimethyl terephthalate has equivalent properties, the recycled dimethyl terephthalate must contain less than 3.2 wt.% of impurities.

While the invention has been described with reference to a preferred embodiment, it will be understood by those skilled in the art that various changes can be made and equivalents can be substituted for elements thereof. In addition, many modifications can be made to adapt a particular situation or material to the teachings of the invention. Therefore, it is intended that the invention not be limited to the particular embodiment disclosed as the best mode contemplated for carrying out this invention.

## Claims

1. A poly(butylene terephthalate) composition comprising a poly(butylene terephthalate) copolymer reaction product of dimethyl terephthalate derived from a terephthalic-containing polyester homopolymer, terephthalic-containing polyester copolymer, or a combination thereof; and from more than 0 to less than 0.8 wt.% of a residual component selected from dimethyl isophthalate, cyclohexane dimethanol, diethylene glycol, triethylene glycol, or a combinations thereof; with 1,4-butanediol.

2. The poly(butylene terephthalate) composition of Claim 1, wherein the poly(butylene terephthalate) copolymer reaction product has a crystallization temperature that is within 7.4°C of the crystallization temperature of the same poly(butylene terephthalate) composition that is the reaction product of virgin dimethyl terepthalate and 1,4-butanediol.

3. The poly(butylene terephthalate) composition of Claim 1, wherein the poly(butylene terephthalate) composition has a melting temperature that is within 1.5°C of the melting temperature of the same poly(butylene terephthalate) composition that is the reaction product of virgin dimethyl terepthalate and 1,4-butanediol.

4. The poly(butylene terephthalate) composition of Claim 1, wherein an article molded from the composition has at least one of
(a) a mold shrinkage in the parallel direction that is at least 98% of the mold shrinkage in the parallel direction of the same article comprising a poly(butylene terephthalate) composition wherein the poly(butylene terephthalate) is the reaction product of virgin dimethyl terepthalate and 1,4-butanediol;
(b) a mold shrinkage in the perpendicular direction that is at least 98% of the mold shrinkage in the parallel direction of the same article comprising a poly(butylene terephthalate) composition wherein the poly(butylene terephthalate) is the reaction product of virgin dimethyl terepthalate and 1,4-butanediol; or
(c) a first heat deflection temperature that is within 9.3°C of the heat deflection temperature measured at 0.455 MPa of the same article comprising a poly(butylene terephthalate) composition wherein the poly(butylene terephthalate) is the reaction product of virgin dimethyl terepthalate and 1,4-butanediol, and a second heat deflection temperature that is within 2.3°C of the heat deflection temperature measured at 1.82 MPa of the same article comprising a poly(butylene terephthalate) composition wherein the poly(butylene terephthalate) is the reaction product of virgin dimethyl terepthalate and 1,4-butanediol.

5. The poly(butylene terephthalate) composition of Claim 1, wherein the residual component is present in the dimethyl terephthalate residual composition in an amount effective to provide the composition comprising the polybutylene terepthalate copolymer reaction product with an elongation at break ranging from 0 to 169%, measured in accordance with ASTM D638.

6. The composition of Claim 1, comprising, based on the total weight of the dimethyl terephthalate residual composition,
from more than 0 to less than 0.8 weight % of the residual component;
wherein the composition comprising the polybutylene terepthalate copolymer reaction product of the dimethyl terephthalate residual composition and 1,4-butanediol has a mold shrinkage in the perpendicular direction ranging from 1.6% to 2.5%.

7. The composition of Claim 1, comprising, based on the total weight of the dimethyl terephthalate residual composition,
from more than 0 to less than or equal to 0.8 weight % of the residual component;
wherein the composition comprising the polybutylene terephthalate copolymer reaction product of the dimethyl terephthalate residual composition and 1,4-butanediol has a crystallization temperature ranging from 173 °C to 188 °C.

8. The poly(butylene terephthalate) composition of Claim 1, comprising, based on the total weight of the dimethyl terephthalate residual composition,
from more than 0 to less than 0.8 weight % of the residual component;
wherein the composition comprising the polybutylene terepthalate copolymer reaction product of the dimethyl terephthalate residual composition and 1,4-butanediol has a heat deflection temperature ranging from 142°C to 162°C when measured at 0.455 MPa in accordance with ASTM method D648.

9. The poly(butylene terephthalate) composition of Claim 1, comprising, based on the total weight of the dimethyl terephthalate residual composition,
from more than 0 to less than 0.8 weight % of the residual component;
wherein the composition comprising the polybutylene terepthalate copolymer reaction product of the dimethyl terephthalate residual composition and 1,4-butanediol has
a. a mold shrinkage in the parallel direction ranging from 2.0.% to 2.3%;
b. a melting temperature ranging from 223°C to 227°C; or
c. a combination thereof.

10. A method of manufacture of the composition of Claim 1, comprising polymerizing the dimethyl terephthalate residual composition and 1,4-butanediol.

11. An article comprising the composition of Claim 1.

12. The article of Claim 11, wherein the article is in the form of a housing.

13. A method of manufacture of an article, comprising molding, extruding, shaping, injection molding, or calendaring the composition of Claim 1.

## Patentansprüche

1. Eine Polybutylenterephthalatmischung umfassend ein Polybutylenterephthalat-Copolymer-Reaktionsprodukt von Dimethylterephthalat abgeleitet von einem Terephtalat enthaltenden Polyester-Homopolymer, einem Terephtalat enthaltenden Polyester-Copolymer oder einer Kombination dieser, und von mehr als 0 bis weniger als 0.8 Gewichtsprozent einer Restkomponente ausgewählt aus Diethylenglycol, Triethylenglycol und Kombinationen dieser, mit 1,4-Butandiol.

2. Die Polybutylenterephthalatmischung des Anspruchs 1, wobei das Polybutylenterephthalat-Copolymer-Reaktionsprodukt eine Kristallisierungstemperatur hat, welche weniger als 7,4°C von der Kristallisierungstemperatur derselben Polybutylenterephthalatmischung abweicht, die ein Reaktionsprodukt von frischem Dimethylterephtalat und 1,4-Butandiol ist.

3. Die Polybutylenterephthalatmischung des Anspruchs 1, wobei die Polybutylenterephthalatmischung eine Schmelztemperatur hat, welche weniger als 1,5°C von der Kristallisierungstemperatur derselben Polybutylenterephthalatmischung abweicht, die das Reaktionsprodukt von frischem Dimethylterephtalat und 1,4-Butandiol ist.

4. Die Polybutylenterephthalatmischung des Anspruchs 1, wobei ein aus der Mischung geformter Gegenstand mindestens eines der folgenden Merkmale aufweist:
(a) eine Formschwindung in paralleler Richtung, die mindestens 98% der Formschwindung in paralleler Richtung ist, welche derselbe Gegenstand aufweist, der eine Polybutylenterephthalatmischung umfasst, bei welcher das Polybutylenterephthalat das Reaktionsprodukt von frischem Dimethylterephtalat und 1,4-Butandiol ist;
(b) eine Formschwindung in senkrechter Richtung, die mindestens 98% der Formschwindung in senkrechter Richtung ist, welche derselbe Gegenstand aufweist, der eine Polybutylenterephthalatmischung umfasst, bei welcher das Polybutylenterephthalat das Reaktionsprodukt von frischem Dimethylterephtalat und 1,4-Butandiol ist; oder
(c) eine erste Wärmeformbeständigkeitstemperatur, welche weniger als 9,3°C von der Wärmeformbeständigkeitstemperatur gemessen bei 0,455 MPa abweicht, welche derselbe Gegenstand aufweist, der eine Polybutylenterephthalatmischung umfasst, bei welcher das Polybutylenterephthalat das Reaktionsprodukt von frischem Dimethylterephtalat und 1,4-Butandiol ist, und eine zweite Wärmeformbeständigkeitstemperatur, welche weniger als 2,3°C von der Wärmeformbeständigkeitstemperatur gemessen bei 1,82 MPa abweicht, welche derselbe Gegenstand aufweist, der eine Polybutylenterephthalatmischung umfasst, bei welcher das Polybutylenterephthalat das Reaktionsprodukt von frischem Dimethylterephtalat und 1,4-Butandiol ist.

5. Die Polybutylenterephthalatmischung des Anspruchs 1, wobei die Restkomponente in der Dimethylterephthalat-Restmischung in hinreichender Menge vorliegt, um der Mischung, welche das Polybutylenterepthalat-Copolymer-Reaktionsprodukt umfasst, eine Bruchdehnung von 0 bis 169%, bestimmt gemäß ASTM D638, zu verleihen.

6. Die Mischung des Anspruchs 1, umfassend, basierend auf dem Gesamtgewicht der Dimethylterephthalat-Restmischung, von mehr als 0 bis weniger als 0,8 Gewichtsprozent der Restkomponente, wobei die Mischung, welche das Polybutylenterepthalat-Copolymer-Reaktionsprodukt der Dimethylterephthalat-Restmischung und 1,4-Butandiol umfasst, eine Formschwindung in senkrechter Richtung von 1.6% bis 2.5% aufweist.

7. Die Mischung des Anspruchs 1, umfassend, basierend auf dem Gesamtgewicht der Dimethylterephthalat-Restmischung, von mehr als 0 bis weniger als 0,8 Gewichtsprozent der Restkomponente, wobei die Mischung, welche das Polybutylenterepthalat-Copolymer-Reaktionsprodukt der Dimethylterephthalat-Restmischung und 1,4-Butandiol umfasst, eine Kristallisierungstemperatur von 173 °C bis 188 °C aufweist.

8. Die Polybutylenterephthalatmischung des Anspruchs 1, umfassend, basierend auf dem Gesamtgewicht der Dimethylterephthalat-Restmischung, von mehr als 0 bis weniger als 0,8 Gewichtsprozent der Restkomponente, wobei die Mischung, welche das Polybutylenterepthalat-Copolymer-Reaktionsprodukt der Dimethylterephthalat-Restmischung und 1,4-Butandiol umfasst, eine Wärmeformbeständigkeitstemperatur von 142°C bis 162°C, gemessen bei 0,455 MPa gemäß ASTM-Verfahren D648, aufweist.

9. Die Polybutylenterephthalatmischung des Anspruchs 1, umfassend, basierend auf dem Gesamtgewicht der Dimethylterephthalat-Restmischung, von mehr als 0 bis weniger als 0,8 Gewichtsprozent der Restkomponente, wobei die Mischung, welche das Polybutylenterepthalat-Copolymer-Reaktionsprodukt der Dimethylterephthalat-Restmischung und 1,4-Butandiol umfasst,
a. eine Formschwindung in paralleler Richtung von 2.0.% bis 2.3%;
b. eine Schmelztemperatur von 223°C bis 227°C; oder
c. eine Kombination der beiden
aufweist.

10. Ein Verfahren zur Herstellung der Mischung gemäß Anspruch 1, umfassend die Polymerisation der Dimethylterephthalat-Restmischung und 1,4-Butandiol.

11. Ein Gegenstand umfassend die Mischung gemäß Anspruch 1.

12. Der Gegenstand gemäß Anspruch 11, wobei der Gegenstand die Form eines Gehäuses hat.

13. Ein Verfahren zur Herstellung eines Gegenstands, umfassend Schmelzen, Extrusion, Formung, Spritzguss oder Kalandrieren der Mischung gemäß Anspruch 1.

## Revendications

1. Composition de poly(téréphtalate de butylène) comprenant un produit de réaction à base de copolymère de poly(téréphtalate de butylène) du téréphtalate de diméthyle dérivé d'un homopolymère de polyester contenant de l'acide téréphtalique, d'un copolymère de polyester contenant de l'acide téréphtalique téréphtalique, ou d'une combinaison de ceux-ci ; et de plus de 0 à moins de 0,8% en poids d'un composant résiduel choisi entre l'isophtalate de diméthyle, le cyclohexane diméthanol, le diéthylène glycol, le triéthylène glycol, ou une combinaison de ceux-ci ; avec le 1,4-butanediol.

2. Composition de poly(téréphtalate de butylène) de la revendication 1, dans laquelle le produit de réaction à base de copolymère de poly(téréphtalate de butylène) a une température de cristallisation qui se situe sur une plage de 7,4°C de la température de cristallisation de la même composition de poly(téréphtalate de butylène) qui est le produit de réaction du téréphtalate de diméthyle vierge et du 1,4-butanediol.

3. Composition de poly(téréphtalate de butylène) de la revendication 1, dans laquelle la composition de poly(téréphtalate de butylène) a une température de fusion qui se situe sur une plage de 1,5°C de la température de fusion de la même composition de poly(téréphtalate de butylène) qui est le produit de réaction du téréphtalate de diméthyle vierge et du 1,4-butanediol.

4. Composition de poly(téréphtalate de butylène) de la revendication 1, dans laquelle un article moulé à partir de la composition a au moins l'un(e)
(a) d'un retrait au moulage dans la direction parallèle qui est d'au moins 98% du retrait au moulage dans la direction parallèle du même article comprenant une composition de poly(téréphtalate de butylène) où le poly(téréphtalate de butylène) est le produit de réaction du téréphtalate de diméthyle vierge et du 1,4-butanediol ;
(b) d'un retrait au moulage dans la direction perpendiculaire qui est d'au moins 98% du retrait au moulage dans la direction parallèle du même article comprenant une composition de poly(téréphtalate de butylène) où le poly(téréphtalate de butylène) est le produit de réaction du téréphtalate de diméthyle vierge et du 1,4-butanediol ; ou
(c) d'une première température de déformation à chaud qui se situe sur une plage de 9,3°C de la température de déformation à chaud mesurée à 0,455 MPa du même article comprenant une composition de poly(téréphtalate de butylène) où le poly(téréphtalate de butylène) est le produit de réaction du téréphtalate de diméthyle vierge et du 1,4-butanediol, et d'une deuxième température de déformation à chaud qui est se situe sur une plage de 2,3°C de la température de déformation à chaud mesurée à 1,82 MPa du même article comprenant une composition de poly(téréphtalate de butylène) où le poly(téréphtalate de butylène) est le produit de réaction du téréphtalate de diméthyle vierge et du 1,4-butanediol.

5. Composition de poly(téréphtalate de butylène) de la revendication 1, dans laquelle le composant résiduel est présent dans la composition résiduelle de téréphtalate de diméthyle en une quantité efficace pour fournir à la composition comprenant le produit de réaction à base de copolymère de polytéréphtalate de butylène un allongement à la rupture allant de 0 à 169%, mesuré conformément à la norme ASTM D638.

6. Composition de la revendication 1, comprenant, par rapport au poids total de la composition résiduelle de téréphtalate de diméthyle,
de plus de 0 à moins de 0,8% en poids du composant résiduel ;
où la composition comprenant le produit de réaction à base de copolymère de polytéréphtalate de butylène de la composition résiduelle de téréphtalate de diméthyle et du 1,4-butanediol a un retrait au moulage dans la direction perpendiculaire allant de 1,6% à 2,5%.

7. Composition de la revendication 1, comprenant, par rapport au poids total de la composition résiduelle de téréphtalate de diméthyle,
de plus de 0 à une valeur inférieure ou égale à 0,8% en poids du composant résiduel ;
où la composition comprenant le produit de réaction à base de copolymère de polytéréphtalate de butylène de la composition résiduelle de téréphtalate de diméthyle et du 1,4-butanediol a une température de cristallisation allant de 173°C à 188°C.

8. Composition de poly(téréphtalate de butylène) de la revendication 1, comprenant, par rapport au poids total de la composition résiduelle de téréphtalate de diméthyle,
de plus de 0 à moins de 0,8% en poids du composant résiduel ;
où la composition comprenant le produit de réaction à base de copolymère de polytéréphtalate de butylène de la composition résiduelle de téréphtalate de diméthyle et du 1,4-butanediol a une température de déformation à chaud allant de 142°C à 162°C lorsqu'elle est mesurée à 0,455 MPa conformément à la méthode ASTM D648.

9. Composition de poly(téréphtalate de butylène) de la revendication 1, comprenant, par rapport au poids total de la composition résiduelle de téréphtalate de diméthyle,
de plus de 0 à moins de 0,8% en poids du composant résiduel ;
où la composition comprenant le produit de réaction à base de copolymère de polytéréphtalate de butylène de la composition résiduelle de téréphtalate de diméthyle et du 1,4-butanediol a
a. un retrait au moulage dans la direction parallèle allant de 2,0% à 2,3% ;
b. une température de fusion allant de 223°C à 227°C ; ou
c. une combinaison de ceux-ci.

10. Procédé de fabrication de la composition de la revendication 1, comprenant la polymérisation de la composition résiduelle de téréphtalate de diméthyle et du 1,4-butanediol.

11. Article comprenant la composition de la revendication 1.

12. Article de la revendication 11, dans lequel l'article est sous la forme d'un boîtier.

13. Procédé de fabrication d'un article, comprenant le moulage, l'extrusion, la mise en forme, le moulage par injection, ou le calandrage de la composition de la revendication 1.
